# EUROPEAN PATENT APPLICATION

(11) **EP 3 480 291 A1**
(43) Date of publication of application: **08.05.2019**
(21) Application number: 17819707.5
(22) Date of filing: 19.05.2017
(51) Int. Cl.: C12M 1/34, C12M 1/00, G02B 21/00

(54) **IMAGE ACQUISITION METHOD, IMAGE ACQUISITION DEVICE, PROGRAM AND CULTURE CONTAINER**

(30) Priority: 01.07.2016 JP 2016131276
(71) Applicant: Sony Corporation, Tokyo 108-0075 (JP)
(72) Inventor: SHINODA, Masataka, Tokyo 108-0075 (JP); OHASHI, Takeshi, Tokyo 108-0075 (JP); ONUMA, Tomoya, Tokyo 108-0075 (JP)
(74) Representative: D Young & Co LLP
(86) International application number: PCT/JP2017/018777
(87) International publication number: WO 2018/003340

(57) **Abstract**

[Object] To provide an image acquisition apparatus, an image acquisition method, a program, and a culture vessel which are suitable for imaging a change in size due to a change of a cell over time at a suitable focus position and acquiring an image.

[Solving Means] An image acquisition method includes: acquiring, by an imaging unit, an image of a cell in a culture vessel including a recess containing the cell; calculating an outer diameter of the cell on a basis of the image acquired by the imaging unit; and determines a focus position of the imaging unit on a basis of the calculation result of the outer diameter by referring to a table in which the plurality of focus positions of the imaging unit, which are different from each other, and outer diameters of the cell are associated with each other, the table being generated in advance.

## Description

### Technical Field

The present technology relates to an image acquisition apparatus, an image acquisition method, a program, and a culture vessel which are used for imaging a cultured cell and acquiring an image.

### Background Art

In recent years, studies have been conducted in cell culture fields for fertility treatments, livestock breeding, and the like.

For example, for observing growth of a fertilized egg associated with in-vitro fertilization, the fertilized egg is put in a culture vessel equipped with a well including a plurality of recesses that individually hold a plurality of fertilized eggs, and it is grown and observed in an incubator. For observing a change over time of the growth of the fertilized egg, the fertilized egg is imaged by a camera and an image is acquired (e.g., see Patent Literature 1).

### Citation List

### Patent Literature

Patent Literature 1: Japanese Patent Application Laid-open No. 2016-96747

### Disclosure of Invention

### Technical Problem

A fertilized egg is greatly growing from about 100 µm to about 250 µm in about 9 days. Thus, it is time-consuming and difficult to adjust the focus position of the camera for imaging the fertilized egg growing up day by day. For example, it is conceivable to use an autofocusing function that adjusts the focus on a basis of a luminance, an optical phase, and the like of a captured observation image. However, in a case of the fertilized egg, the autofocusing function does not work well since its diameter is large, specifically, about 100 µm.

In view of the above-mentioned circumstances, it is an object of the present technology to provide an image acquisition apparatus, an image acquisition method, a program, and a culture vessel which are suitable for imaging a change in size due to a change of a cell over time at a suitable focus position and acquiring an image.

### Solution to Problem

An image acquisition method according to an embodiment of the present technology includes:
acquiring, by an imaging unit, an image of a cell in a culture vessel including a recess containing the cell;
calculating an outer diameter of the cell on a basis of the image acquired by the imaging unit; and
determining a focus position of the imaging unit on a basis of the calculation result of the outer diameter by referring to a table in which the plurality of focus positions of the imaging unit, which are different from each other, and outer diameters of the cell are associated with each other, the table being generated in advance.

In accordance with this embodiment, the focus position is determined on a basis of the outer diameter of the cell, and thus the image of the cell can be easily acquired by the imaging unit at that focus position. That is, by considering the cell, for example, a fertilized egg to have an approximately perfect spherical shape, an outer diameter is determined on a basis of a two-dimensional image of the cell having an approximately perfect circular shape, a center position of the cell having an approximately perfect spherical shape is determined, and the center position of this cell is used as the focus position in image acquisition. Then, the table in which the plurality of different focus positions, in other words, a plurality of focus positions different in a focus depth direction and the outer diameters of the cell are associated with each other is generated in advance. In this manner, the focus position can be determined on a basis of the calculated outer diameter of the cell by referring to this table.

The acquisition of the image of the cell by the imaging unit is performed from above while the culture vessel is arranged in a horizontal plane, and the focus position is at a position moved from a reference position upward in a direction perpendicular to the horizontal plane by a distance equal to a radius determined on a basis of the calculated outer diameter of the cell, the reference position being a lowest position of the recess.

In this manner, by considering the cell to have an approximately perfect spherical shape, the radius of the cell can be determined on a basis of the outer diameter of the cell having an approximately perfect circular shape as viewed from above. Then, by setting the position moved from the reference position upward by a distance equal to this radius as the focus position, setting can be made such that the focus position is located at the center of the cell having an approximately perfect spherical shape.

The image of the cell is acquired by the imaging unit, the outer diameter of the cell is calculated on a basis of the image acquired by the imaging unit, the focus position of the imaging unit is determined on a basis of the calculation result of the outer diameter by referring to the table, and the image of the cell is acquired by the imaging unit at the determined focus position every arbitrary period.

In this manner, by acquiring the image of the cell at the determined focus position, for example, every arbitrary period such as at intervals of five minutes and at intervals of one day, the cell can be imaged at a focus position suitable for the size of the cell at an arbitrary time and how the cell is growing up can be acquired as a clear image.

The culture vessel further includes a plurality of focus adjustment marks arranged at positions outside the recess such that the plurality of focus adjustment marks are different in height from each other, the positions being higher than the lowest position of the recess and lower than a highest position of the recess, and
the focus position of the imaging unit is determined by using the focus adjustment mark and the image of the cell is acquired by the imaging unit at the determined focus position every arbitrary period after the determination of the focus position is performed by referring to the table.

In this manner, determination of the focus position in first cell image acquisition may be performed by referring to the table and determination of the focus position in the subsequent image acquisition may be performed by utilizing the focus adjustment mark provided in the culture vessel. The growth curve drawn by the cell is approximately the same curve, and a change in size of the cell due to a change over time can be estimated in some degree. Thus, on a basis of the growth curve of the cell, the elapsed time and the focus adjustment mark can be associated with each other. Therefore, the focus position can be determined by referring to the table in the first cell image acquisition and the focus position can be determined by using the focus adjustment mark thereafter. In this case, the calculation process of the outer diameter of the cell is performed in the image acquisition using the table while the calculation process of the outer diameter of the cell does not need to be performed in the image acquisition using the focus adjustment mark. During observation of the growth of the cell in the culture vessel, the outer diameter calculation process only needs to be performed at least only one time. It should be noted that in the image acquisition using the focus adjustment mark, the calculation process of the outer diameter of the cell may be performed every time the image acquisition is performed or may be performed at an arbitrary time instead of performing it every time the image acquisition is performed.

The imaging unit is calibrated by using the focus adjustment mark of the culture vessel as a reference before the acquisition of the image of the cell, and
the determination of the focus position of the imaging unit is performed in view of the calibration result.

In this manner, the focus adjustment accuracy is improved by performing calibration using the focus adjustment mark of the culture vessel.

The culture vessel includes a plurality of recesses that individually contain a plurality of cells,
the acquisition of the image of the cell by the imaging unit is performed by collectively imaging the plurality of cells for each of the plurality of focus positions different from each other, the plurality of focus positions being included in the table,
one image for the outer diameter calculation is selected from the image result acquired for each of the plurality of focus positions different from each other, for each of the cells, and
the calculation of the outer diameter of the cell is performed based on the image selected for the outer diameter calculation.

In this manner, after the images are acquired by collectively imaging the plurality of cells for each of the plurality of focus positions, the one image for the outer diameter calculation may be selected from those images for each cell.

An image acquisition method according to another embodiment of the present technology includes:
acquiring, by an imaging unit, an image of a cell in a culture vessel, the culture vessel including a recess containing the cell, and a plurality of focus adjustment marks arranged at positions outside the recess such that the plurality of focus adjustment marks are different in height from each other, the positions being higher than a lowest position of the recess and lower than a highest position of the recess;
calculating an outer diameter of the cell on a basis of the image acquired by the imaging unit;
selecting one focus adjustment mark from the plurality of focus adjustment marks on a basis of the calculation result of the outer diameter; and
acquiring, by the imaging unit, an image of the cell by using the focus adjustment mark as a focus position.

In accordance with this embodiment, the focus position is determined on a basis of the outer diameter of the cell, and thus the image of the cell can be easily acquired by the imaging unit at that focus position. That is, by considering the cell to have an approximately perfect spherical shape, an outer diameter is determined on a basis of a two-dimensional image of the cell having an approximately perfect circular shape, a center position of the cell having an approximately perfect spherical shape is determined, and the center position of this cell is used as the focus position in image acquisition. The growth curve drawn by the cell is approximately the same curve, and a change in size of the cell due to a change over time can be estimated in some degree. Thus, on a basis of the growth curve of the cell, the elapsed time and the focus adjustment mark can be associated with each other. Therefore, the focus position can be determined on a basis of the calculated outer diameter of the cell by using the focus adjustment mark provided in the culture vessel.

The outer diameter of the cell is calculated on a basis of the image obtained by the imaging unit, the one focus adjustment mark from the plurality of focus adjustment marks is determined on a basis of the calculation result of the outer diameter, and the focus adjustment mark is used as the focus position every arbitrary period.

In this manner, by determining the focus position of the imaging unit on a basis of the calculation result of the outer diameter of the cell and acquiring the image of the cell at the determined focus position, for example, every arbitrary period such as at intervals of five minutes and at intervals of one day, the cell can be imaged at a focus position suitable for the size of the cell at an arbitrary time and how the cell is growing up can be easily acquired as a clear image.

Here, every arbitrary period also includes a continuous case. For example, while continuously imaging the cell with a video camera, the outer diameter calculation based on the captured image, the determination of the focus position based on the calculation result of the outer diameter, and the image acquisition at the determined focus position can be continuously repeated.

The culture vessel includes a plurality of recesses that individually contain a plurality of cells,
the acquisition of the image of the cell by the imaging unit is performed by collectively imaging the plurality of cells for each of the focus adjustment marks,
one image for the outer diameter calculation is selected from the image result acquired for each of the focus adjustment marks, for each of the cells, and
the calculation of the outer diameter of the cell is performed based on the image selected for the outer diameter calculation.

In this manner, after the images are acquired by collectively imaging the plurality of cells for each of the plurality of focus adjustment marks, the one image for the outer diameter calculation may be selected from those images for each cell.

An image acquisition apparatus according to an embodiment of the present technology includes:
an imaging unit that images a cell in a culture vessel including a recess containing the cell;
a calculation unit that calculates an outer diameter of the cell on a basis of the image acquired by the imaging unit; and
a determination unit that determines a focus position of the imaging unit on a basis of the calculation result of the outer diameter by referring to a table in which the focus position of the imaging unit and the outer diameter of the cell are associated with each other, the table being generated in advance.

In accordance with this embodiment, the focus position is determined on a basis of the outer diameter of the cell, and thus the image of the cell can be easily acquired by the imaging unit at that focus position.

An image acquisition apparatus according to another embodiment of the present technology includes:
an imaging unit that images a cell in a culture vessel, the culture vessel including a recess containing the cell, and a plurality of focus adjustment marks arranged at positions outside the recess such that the plurality of focus adjustment marks are different in height from each other, the positions being higher than a lowest position of the recess and lower than a highest position of the recess;
a calculation unit that calculates an outer diameter of the cell on a basis of an image acquired by the imaging unit; and
a determination unit that determines one focus adjustment mark from the plurality of focus adjustment marks on a basis of the calculation result of the outer diameter.

In accordance with this embodiment, the focus position is determined on a basis of the outer diameter of the cell, and thus the image of the cell can be easily acquired by the imaging unit at that focus position.

The image acquisition apparatus further includes a culture apparatus that contains the culture vessel.

With this configuration, a change in size due to a change of the cell over time in the culture vessel can be observed in the culture apparatus.

A program according to an embodiment of the present technology is a program that causes an information processing apparatus to function as:
an image acquisition unit that acquires an image of a cell in a culture vessel including a recess containing the cell, the image being taken by an imaging unit;
a calculation unit that calculates an outer diameter of the cell on a basis of the acquired image of the cell; and
a determination unit that determines a focus position of the imaging unit on a basis of the calculation result, in which
the determination unit determines the focus position of the imaging unit on a basis of the calculation result of the outer diameter, which is obtained by the calculation unit, by referring a table in which focus positions of the imaging unit, which are different from each other, and outer diameters of the cell are associated with each other, the table being generated in advance.

A program according to another embodiment of the present technology is a program that causes an information processing apparatus to function as:
an image acquisition unit that acquires an image of a cell in a culture vessel, the culture vessel including a recess containing the cell, and a plurality of focus adjustment marks arranged at positions outside the recess such that the plurality of focus adjustment marks are different in height from each other, the positions being higher than a lowest position of the recess and lower than a highest position of the recess, the image being taken by an imaging unit;
a calculation unit that calculates an outer diameter of the cell on a basis of the acquired image of the cell; and
a determination unit that determines a focus position of the imaging unit on a basis of the calculation result, in which
the determination unit determines one focus adjustment mark from the plurality of focus adjustment marks on a basis of the calculation result of the outer diameter which is obtained by the calculation unit.

A culture vessel according to an embodiment of the present technology includes:
a recess group including a plurality of recesses that individually contain a plurality of cells; and
a plurality of focus adjustment marks arranged at positions outside the recess group such that the plurality of focus adjustment marks are different in height from each other, the positions being higher than a lowest position of the recess and lower than a highest position of the recess.

In accordance with this embodiment, when the image of the cell in the culture vessel is acquired, the focus position of the imaging unit can be determined by using the focus adjustment mark. Advantageous Effects of Invention

As described above, in accordance with the present technology, in a technology of acquiring an image of a cell, a focus position can be easily determined in accordance with growth of the cell.

It should be noted that the effects described here are not necessarily limitative and may be any effect described in the present disclosure.

### Brief Description of Drawings

[Fig. 1] A plan view of a culture vessel according to a first embodiment.
[Fig. 2] A cross-sectional view of the culture vessel shown in Fig. 1.
[Fig. 3] An enlarged view of a region A of the culture vessel shown in Fig. 2, which is surrounded by a long dashed short dashed line.
[Fig. 4] An enlarged view of a center portion of the culture vessel shown in Fig. 1.
[Fig. 5] A diagram showing a configuration of an image acquisition apparatus according to the first embodiment.
[Fig. 6] A block diagram showing an image acquisition system of the image acquisition apparatus according to the first embodiment or an image acquisition apparatus according to a second embodiment.
[Fig. 7] A flowchart of an image acquisition method according to the first embodiment.
[Fig. 8] A flowchart of an outer diameter calculation method according to the first embodiment.
[Fig. 9] A diagram for describing the outer diameter calculation method according to the first embodiment.
[Fig. 10] A diagram for describing the outer diameter calculation method according to the first embodiment.
[Fig. 11] A flowchart of an image acquisition method according to the second embodiment.
[Fig. 12] A flowchart showing a method of acquiring images for selecting an image for outer diameter calculation according to a fourth embodiment.
[Fig. 13] A block diagram showing an image acquisition system of an image acquisition apparatus according to the fourth embodiment or an image acquisition apparatus according to a fifth embodiment.
[Fig. 14] A flowchart showing a method of acquiring images for selecting an image for outer diameter calculation according to the fifth embodiment.
[Fig. 15] A flowchart of a method of acquiring images for selecting an image for outer diameter calculation including a calibration process according to a sixth embodiment.
[Fig. 16] A diagram showing a configuration of an image acquisition apparatus according to a seventh embodiment.
[Fig. 17] A flowchart of a method for first image acquisition according to an eighth embodiment.

### Mode(s) for Carrying Out the Invention

Hereinafter, embodiments according to the present technology will be described with reference to the drawings.

### (First Embodiment)

### <Configuration of Culture Vessel>

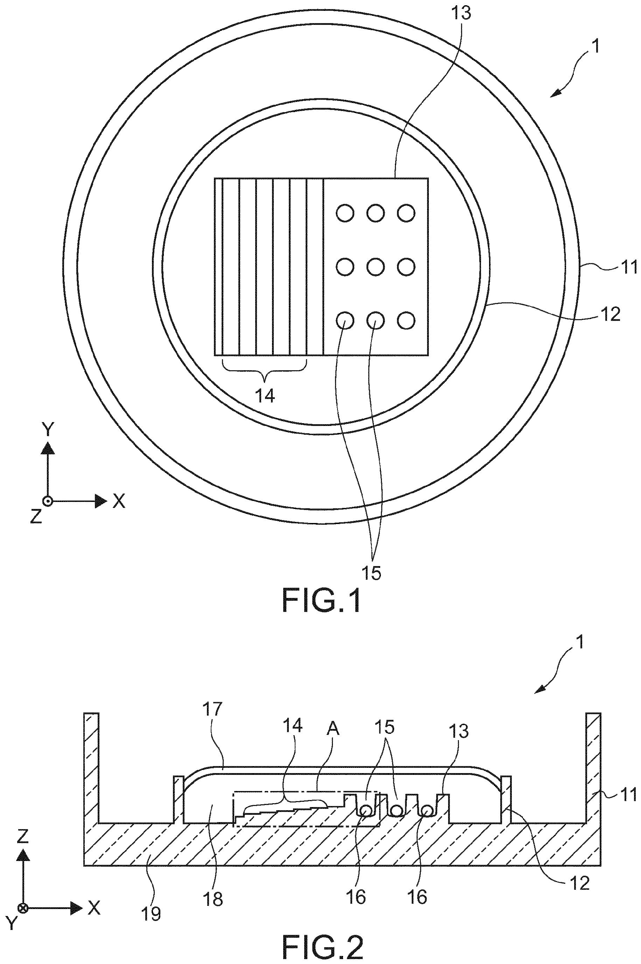

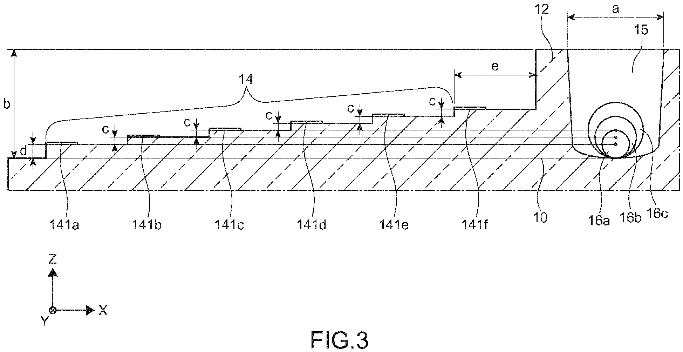

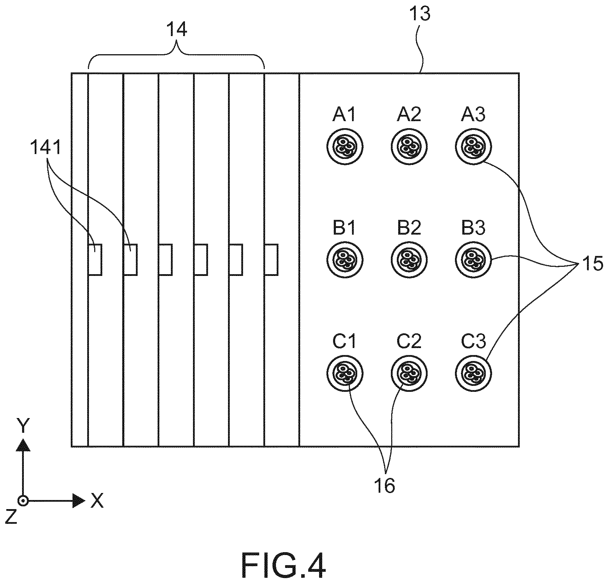

Fig. 1 is a plan view of a culture vessel (dish) and Fig. 2 is a cross-sectional view of the culture vessel. Fig. 3 is a partial enlarged view of the culture vessel and is an enlarged view of a region surrounded by a long dashed short dashed line A of Fig. 2. Fig. 4 is an enlarged view of a center portion of the culture vessel.

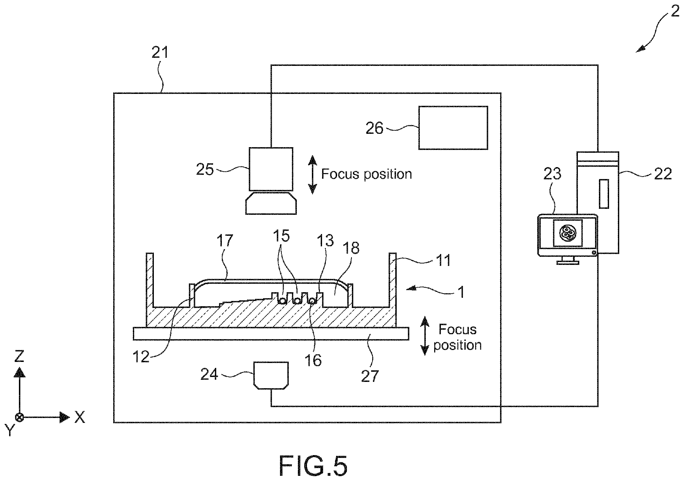

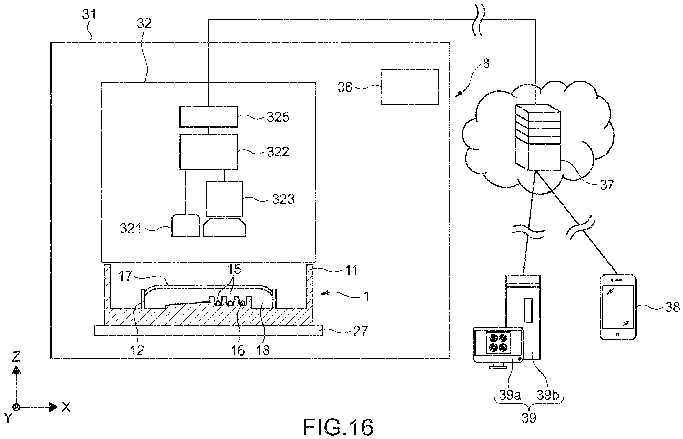

Figs. 1 to 4 show XYZ-axis coordinates, where a depth direction of a culture vessel 1 when the culture vessel 1 is disposed in a horizontal plane is a Z-axis and the horizontal plane is an XY-plane. The same applies to XYZ-axis coordinates shown in Figs. 5 and 16 to be described later.

Herein, the term "cell" at least conceptionally includes a single cell and an aggregate of a plurality of cells. The "cell" at least includes an unfertilized egg cell (egg), a fertilized egg, and an embryo of an organism which all have a stereoscopic (three-dimensional) shape, for example. In this embodiment and embodiments to be described later, descriptions will be made by exemplifying a fertilized egg as the cell to be put in the culture vessel 1.

As shown in Figs. 1 and 2, the culture vessel 1 includes a bottom 19, an outer wall 11, an inner wall 12, recesses (wells) 15, and a protruding portion 13 for cell arrangement.

The culture vessel 1 can be made of, for example, an inorganic material such as metal, glass, and silicon and an organic material such as a polystyrene resin, a polyethylene resin, a polypropylene resin, an ABS resin, nylon, an acrylic resin, a fluororesin, a polycarbonate resin, a polyurethane resin, a methylpentene resin, a phenol resin, a melamine resin, an epoxy resin, and a vinyl chloride resin. In this embodiment, a transparent culture vessel 1 made of a polystyrene resin is used.

The culture vessel 1 having a circular plan shape (XY-plane shape) has a diameter of about 38 mm. A region having a circular plan shape, which is surrounded by the inner wall 12, has a diameter of about 8 mm. The protruding portion 13 for cell arrangement having a rectangular plan shape has a size of about 3 mm by about 3 mm. In this embodiment, in order to make it easy to understand shape descriptions, illustrations are made with scales different from actual dimensions for the sake of convenience.

The plurality of recesses 15 are provided. Each recess 15 is capable of containing a single cell, here, a fertilized egg 16 while maintaining it at a fixed position. Further, each recess 15 contains liquid in addition to the fertilized egg 16. The "liquid" is typically a culture medium suitable for culturing the cell. Hereinafter, it will be referred to as a culture medium. As shown in Fig. 2, a culture medium 18 for culturing the fertilized egg 16 is injected into the recesses 15 and the region surrounded by the inner wall 12. In addition, in order to prevent evaporation of this culture medium 18, oil 17 is injected into the region surrounded by the inner wall 12 so as to cover the culture medium 18.

The bottom 19 has a circular plan shape. The outer wall 11 and the inner wall 12 are concentrically formed. The height of the inner wall 12 is made smaller than the height of the outer wall 11.

The protruding portion 13 for cell arrangement is arranged in the region surrounded by the inner wall 12 in a center portion of the bottom 19, at a distance from the inner wall 12. The protruding portion 13 for cell arrangement has a rectangular plan shape.

As shown in Figs. 1 to 4, the protruding portion 13 for cell arrangement includes a plurality of recesses 15, here, nine recesses 15 in a 3-by-3 array, focus adjustment steps 14 in a stairs-shape which are provided outside a recess group of those nine recesses 15, and identification marks A1, A2, A3, B1, B2, B3, C1, C2, and C3 for enabling the plurality of recesses 15 to be identified for each recess 15. The focus adjustment steps 14 include six steps. The focus adjustment steps 14 are provided at one side of the rectangular protruding portion 13 for cell arrangement. The focus adjustment steps 14 are provided such that the steps stepwise become lower outward from the center of the protruding portion 13 for cell arrangement. It is favorable that a horizontal depth e of the focus adjustment step 14 is approximately equal to a diameter a of the recess 15 having an opening having a circular plan shape.

The recesses 15 are provided such that a center-to-center distance between the adjacent recesses 15 is 400 µm. The recess 15 only needs to have a shape and a size with which the fertilized egg 16 to be observed can be put therein. As shown in Fig. 3, in this embodiment, regarding the recess 15, the plan shape (XY-plane shape) of the opening of the recess 15 as viewed from above is a circular shape having the diameter a of 280 µm, and its cross-section has an approximately trapezoidal shape such that the opening becomes slightly smaller toward the bottom 19. The recess 15 has a vertical depth b of 280 µm.

Respective steps of the focus adjustment steps 14 include focus adjustment marks 141a to 141f. By using a lowest position of the recess 15 as a reference position 10, the focus adjustment marks 141a to 141f are provided at positions which are higher than this reference position 10 and are lower than a highest position of the recess 15 in the Z-axis direction. The respective focus adjustment marks 141a to 141f are different from one another in height from the reference position 10.

When the culture vessel 1 is disposed on the horizontal plane (XY-plane) with its aperture oriented upward, the lowermost focus adjustment mark 141a is arranged at a position moved by 50 µm from the reference position 10 upward in the direction (Z-axis direction) perpendicular to this horizontal plane. In Fig. 3, d denotes a distance between the reference position 10 and the focus adjustment mark 141a in the Z-axis direction and is 50 µm.

In addition, the focus adjustment steps 14 are provided such that the focus adjustment marks 141a to 141f are arranged at equal intervals such that a distance c between the focus adjustment marks adjacent to each other in the Z-axis direction is 15 µm. The distance c between the focus adjustment marks adjacent to each other in the Z-axis direction corresponds to a step height between the focus adjustment steps 14 in a stairs-shape. Further, the horizontal depth e on the horizontal plane of each step of the focus adjustment steps 14 in a stairs-shape is 280 µm.

In a case of culturing the fertilized egg 16 by using the culture vessel 1, the fertilized egg has a size of about 100 µm immediately after fertilization is confirmed. In order to adjust, for example, the focus position to the center of this fertilized egg after this fertilized egg is considered to have an approximately perfect spherical shape, it is only necessary to set, as the focus position, a position moved upward by 50 µm corresponding to a radius of the fertilized egg from the reference position 10, i.e., the position of the focus adjustment mark 141a.

Here, the cell having an approximately perfect spherical shape includes, for example, an egg, a fertilized egg, and the like. Eggs and fertilized eggs of laboratory animals such as mice, domestic animals such as cattle and pigs, pet animals such as dogs and cats, and humans can be exemplified. The present technology is favorable for image acquisition of those cells.

The focus adjustment marks 141a to 141f may be formed by being attached as seals or the like. For example, those colored in black or the like can be used, and their shapes may be symbols or patterns. Further, the marks may have different shapes or may be colored in different colors such that the focus adjustment marks 141a to 141f can be differentiated from one another.

Alternatively, an embedded type may be employed instead of the seal type. In this case, the focus adjustment marks 141a to 141f may be formed by providing the respective steps of the focus adjustment steps 14 with dimples and embedding colored resins or the like therein, for example.

Alternatively, the focus adjustment marks 141a to 141f may be formed by printing.

Alternatively, partially dimples or protrusions made of the same material as that of the culture vessel may be provided as the focus adjustment mark 141a to 141f for each step of the focus adjustment steps 14.

The shapes, sizes, colors, and materials of the focus adjustment marks 141a to 141f can be variously selected as long as those are not affected by the image acquisition of the fertilized egg 16 and the observation of the fertilized egg 16 and do not affect the culture medium 18.

In this embodiment, the focus adjustment marks 141a to 141f are provided, attached to the culture vessel 1, for example. However, without attaching such focus adjustment marks 141a to 141f, the focus adjustment steps 14 themselves may function as the focus adjustment marks, and the focus adjustment marks include steps different in height.

It should be noted that the culture vessel 1 is transparent, and thus the focus adjustment is facilitated by providing the respective steps of the focus adjustment steps 14 with the focus adjustment marks 141a to 141f easy to be identified.

In the culture vessel 1 of this embodiment, the focus adjustment steps 14 are provided outside the recess group of the plurality of recesses 15. Therefore, as compared to a case where the focus adjustment steps are provided among the recesses 15, the number of recesses 15 provided in an upper surface of the protruding portion 13 can be maximized.

### <Configuration of Image Acquisition Apparatus>

Next, an image acquisition apparatus that acquires images of the fertilized eggs 16 in the culture vessel 1 by using the above-mentioned culture vessel 1 will be described. It should be noted that although in this embodiment, a case of using the culture vessel including the focus adjustment marks is exemplified, a culture vessel including no focus adjustment marks can also be used.

Fig. 5 is a diagram showing a configuration of the image acquisition apparatus.

As shown in Fig. 5, an image acquisition apparatus 2 includes a culture apparatus 21, a light source 24, a camera 25 as an imaging unit, a temperature and humidity control unit 26, an information processing apparatus 22, a display apparatus 23, and a stage 27.

The culture apparatus 21 is a chamber that houses the culture vessel 1 containing the fertilized eggs 16 and cultures the fertilized eggs 16. The culture vessel 1 is held horizontally inside the culture apparatus 21.

The light source 24 emits light with which the culture vessel 1 is to be irradiated when the fertilized eggs 16 in the culture vessel 1 are imaged by the camera 25.

The camera 25 images the fertilized eggs 16 in the culture vessel 1 and is arranged inside the culture apparatus 21. The camera 25 includes a lens barrel including a lens group movable in an optical-axis direction (Z-axis direction), a solid-state imaging element such as a complementary metal oxide semiconductor (CMOS) and a charge coupled device (CCD) that captures object light passing the lens barrel, a driving circuit that drives them, and the like. It should be noted that the camera 25 may be installed inside the culture vessel 1 so as to be movable in the Z-axis direction and a horizontal plane direction (XY-plane direction) of the figure. Alternatively, the camera 25 may be configured to be capable of imaging not only a still image but also successive images (video).

The temperature and humidity control unit 26 controls the temperature and humidity inside the culture apparatus 21 and forms an environment suitable for culturing the fertilized eggs 16. The temperature and humidity control unit 26 is arranged inside the culture apparatus 21.

The information processing apparatus 22 includes a computer including a CPU, an internal memory, and the like. The information processing apparatus 22 calculates an outer diameter of the fertilized egg 16 on a basis of the image information acquired from the camera 25 and determines a focus position of the camera 25 which is suitable for the image acquisition of the fertilized egg 16 on a basis of the calculation result thereof. Further, the information processing apparatus 22 causes the display apparatus 23 to display an image of the fertilized egg 16. Further, the captured image is saved in a recording apparatus.

The display apparatus 23 displays an image and the like acquired by the camera 25.

On the stage 27, the culture vessel 1 is disposed. The stage 27 holds the culture vessel 1 horizontally inside the culture apparatus 21.

### <Configuration of Image Acquisition System>

Next, an image acquisition system in the above-mentioned image acquisition apparatus 2 will be described.

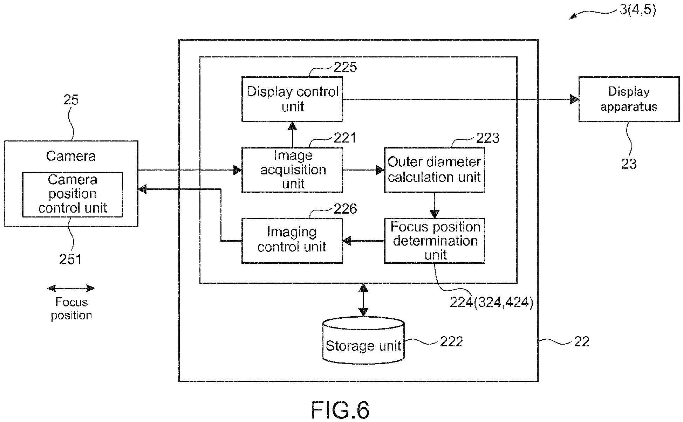

Fig. 6 is a diagram showing a configuration of an image acquisition system 3.

As shown in Fig. 6, the image acquisition system 3 includes the camera 25, the information processing apparatus 22, and the display apparatus 23.

The information processing apparatus 22 includes an image acquisition unit 221, an outer diameter calculation unit 223, a focus position determination unit 224, an imaging control unit 226, a display control unit 225, and a storage unit 222.

The image acquisition unit 221, the outer diameter calculation unit 223, the focus position determination unit 224, and the imaging control unit 226 are realized in such a manner that a program recorded on a ROM that is an example of a computer-readable non-transitory recording medium is loaded to a RAM and is executed by a CPU.

The image acquisition unit 221 acquires the image information captured by the camera 25 from the camera 25.

The outer diameter calculation unit 223 calculates the outer diameter of the fertilized egg 16 on a basis of the image acquired by the camera 25.

The focus position determination unit 224 determines the focus position of the camera 25 on a basis of the calculation result of the outer diameter of the fertilized egg 16. Specifically, by referring to a focus table generated in advance in which a plurality of different focus positions of the camera 25 and outer diameters of the fertilized egg 16 are associated with each other, the calculation result of the outer diameter of the fertilized egg 16 is checked against the outer diameter in the focus table, and the focus position corresponding to the outer diameter is determined.

In this embodiment, for example, the focus table is generated such that a position at a height of 50 µm, 65 µm, 80 µm, 95 µm, 110 µm, or 125 µm from the reference position 10 in the Z-axis direction can be the focus position. With this configuration, imaging can be performed by setting the center of the fertilized egg having a diameter of 100 µm to 250 µm as the focus position. That is, the fertilized egg 16 is considered to have an approximately spherical shape, and the focus position in the focus table can be set assuming that the focus position is set to a position moved from the reference position 10 of the culture vessel 1 upward in the Z-axis direction by a distance equal to the radius of the fertilized egg 16.

The imaging control unit 226 outputs a focus position information signal to the camera 25 on a basis of the focus position information determined by the focus position determination unit 224.

The camera 25 includes a camera position control unit 251. The camera position control unit 251 sets the focus position of the camera 25 on a basis of the focus position information signal from the imaging control unit 226. The focus position may be set by adjusting a lens position of the camera 25. Alternatively, the focus position may be set by adjusting the position of the stage 27 on which the culture vessel 1 is disposed.

Further, the number of steps of the focus position can be adjusted on a basis of growth velocity or the number of observation dates of the fertilized egg 16. A very large number of steps may be employed or two to three steps may be employed.

The display control unit 225 outputs an image information signal for causing the display apparatus 23 to display the image acquired by the image acquisition unit 221 to the display apparatus 23.

The storage unit 222 stores the image information acquired by the image acquisition unit 221 and the like.

### <Image Acquisition Method>

Next, an image acquisition method by the above-mentioned image acquisition apparatus 2 will be described with reference to Figs. 5 to 7.

In this embodiment, for each fertilized egg 16, the outer diameter is calculated and the focus position is determined on a basis of this outer diameter calculation result.

It should be noted that although in this embodiment, the case where the culture vessel 1 including the focus adjustment marks 141a to 141f is used is exemplified, the image can also be acquired in accordance with the image acquisition method of this embodiment by using a culture vessel including no focus adjustment marks.

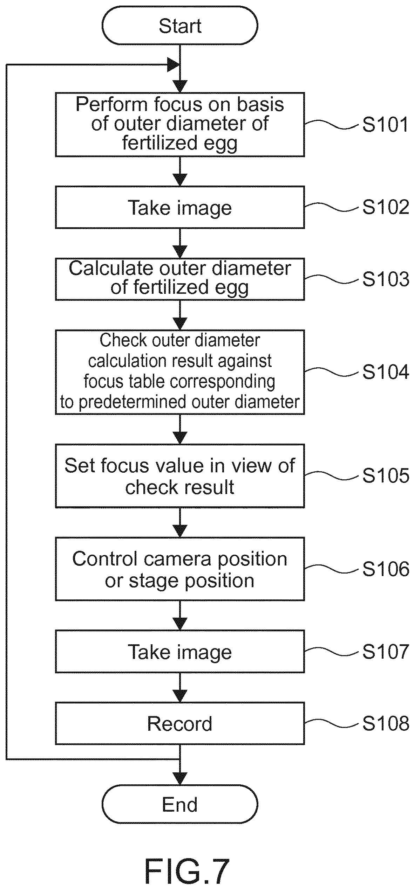

Fig. 7 is a flowchart of the image acquisition method.

First of all, after the fertilized eggs 16 confirmed to be fertilized are put in the recesses 15 of the culture vessel 1 one by one, the culture medium 18 is injected into the recesses 15 and into the region surrounded by the inner wall 12 with a pipette. After that, the oil 17 is injected into the region surrounded by the inner wall 12 so as to cover the culture medium 18.

Next, as shown in Fig. 5, it is horizontally disposed on the stage 27 inside the culture apparatus 21. At this time, if necessary, a transparent lid (not shown) made of the same material as the culture vessel 1 may be placed on the culture vessel 1.

The image acquisition of the fertilized egg 16 is performed in a state in which the culture vessel 1 containing the fertilized eggs 16 is held inside the culture apparatus 21.

Next, light is emitted by the light source 24 from below the culture vessel 1, and the focus position is determined on a basis of the outer diameter of the fertilized egg (S101).

Next, the fertilized egg 16 is imaged by the camera 25 positioned above the culture vessel 1 (S102).

The captured image of the fertilized egg 16 is acquired by the image acquisition unit 221 as shown in Fig. 6. Next, the outer diameter calculation unit 223 calculates the outer diameter of the fertilized egg 16 on a basis of the image of the fertilized egg 16, which is acquired by the image acquisition unit 221 (S103). The outer diameter calculation method will be described later in detail.

Next, the focus position determination unit 224 refers to the focus table generated in advance (S104). In the focus table, the plurality of focus positions of the camera 25 which are different from each other and the outer diameters of the fertilized egg 16 are associated with each other.

In this embodiment, the fertilized egg 16 is considered to have an approximately perfect spherical shape, and the radius of the fertilized egg 16 is determined on a basis of the outer diameter of the fertilized egg 16 having an approximately perfect circular shape as viewed from above. Then, by setting the position moved by a distance equal to this radius upward (in the Z-axis direction) from the reference position 10 at the lowest position of the recess 15 of the culture vessel 1, with which the fertilized egg 16 is held in contact, as the focus position, setting can be made such that the focus position is located at the center of the fertilized egg 16 having an approximately perfect spherical shape.

The focus table is generated in advance while the outer diameter of the fertilized egg 16 is associated with the focus position located at the position moved from the reference position 10 by the distance corresponding to the radius determined on a basis of the outer diameter of the fertilized egg 16. Therefore, the focus position can be determined by checking the calculation result of the outer diameter against the focus table.

Next, the imaging control unit 226 outputs a focus position information signal to the camera position control unit 251 such that the focus position of the camera 25 becomes the focus position determined by the focus position determination unit 224 (S105).

Next, the camera position control unit 251 adjusts the focus position by moving the lens position or the stage of the camera on a basis of the focus position information signal from the imaging control unit 226 (S106).

Next, the fertilized egg 16 is imaged at the determined focus position (S107), the image acquisition unit 221 acquires the captured image, and the storage unit 222 records the acquired image (S108). The display control unit 225 causes the display apparatus 23 to display the image acquired by the image acquisition unit 221.

The image of the fertilized egg 16 acquired at S107 is obtained by performing imaging with the center of the fertilized egg 16 being set as the focus position.

Those steps S101 to S108 are performed for each fertilized egg 16 to acquire images of the respective fertilized eggs 16.

Then, images are acquired by performing those steps of S101 to S108 every arbitrary period, for example, at predetermined intervals such as every ten minutes or every other day, or continuously. With this configuration, how the fertilized eggs 16 are growing up can be observed. Further, if necessary, images may be acquired in real time and the state of the fertilized egg may be displayed on the display apparatus 23 and may be observed any time.

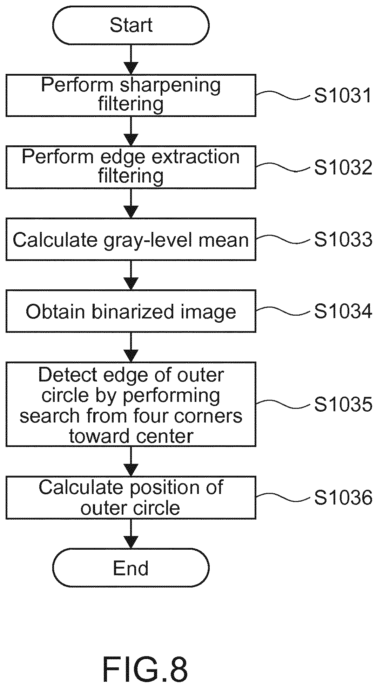

Next, a method for calculating the outer diameter of the fertilized egg at S103 of the above-mentioned image acquisition method will be described with reference to Figs. 8 to 10.

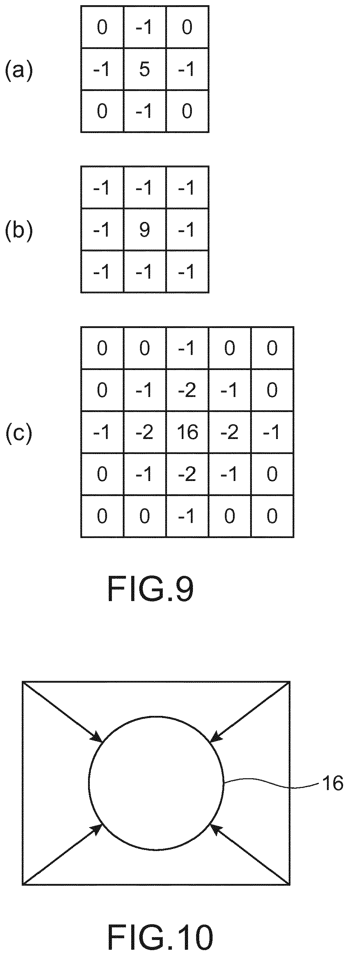

Fig. 8 is a flowchart of the outer diameter calculation method. Figs. 9 and 10 are diagrams for describing the outer diameter calculation method. Hereinafter, the description will be made in accordance with the flowchart of Fig. 8.

The original image of the fertilized egg 16, which is acquired by performing focusing on a basis of the outer diameter of the fertilized egg 16, is subjected to sharpening filtering (S1031).

For the sharpening filtering, for example, a filter matrix of 3 by 3 pixels shown in (a) or (b) of Fig. 9 or a filter matrix of 5 by 5 pixels shown in (c) of Fig. 9 can be used. In a case of using the filter matrix of 3 by 3 pixels shown in (a) or (b) of Fig. 9, a value obtained by multiplying nine pixels including a single pixel A and eight pixels surrounding that pixel by numerical values shown in the filter matrix of Fig. 9 (a) or (b) and adding them up is set as a gray level of that single pixel A, and similar calculation is performed on all the pixels. In the filter matrices shown in Fig. 9, the center value is positive and values surrounding it are negative, and thus a difference between the gray levels of the adjacent pixels is larger as a calculation result. Therefore, a change in the gray level is larger at the outline portion and the like, and the outline of the fertilized egg 16 is emphasized. By performing the sharpening filtering in this manner, an annular image having the outer circle of the fertilized egg 16 emphasized can be obtained.

Next, the annular image sharpened in the sharpening filtering is subjected to edge extraction filtering (S1032). The edge extraction filtering is for extracting the edge portion, i.e., the outline of the image. At the outline portion, the gray-level difference is a sharp change. Therefore, the gray-level difference is larger when the adjacent pixel values are subtracted from each other, and it can be extracted as the outline.

By subjecting the sharpened annular image to the edge extraction filtering in this manner, an outline image can be obtained. Each pixel of the outline image is expressed as a gray level of 0 to 255.

Next, a mean Th of gray levels of all the pixels of the outline image is calculated (S1033). It should be noted that a pixel having a gray level of 0 is excluded from the mean calculation. Then, binarization processing is performed to obtain a binarized image by using the mean Th as a threshold value and setting a pixel having a gray level larger than it as white (gray level 255) and setting a pixel having a gray level smaller than it as black (gray level 0) (S1034).

Next, as shown in Fig. 10, the edge of the outline of the outer circle is detected by sequentially performing search from the four corners of the binarized values toward the center coordinates (S1035), and coordinates where it is detected is stored. In this manner, four coordinates on the outer circle are determined. It should be noted that here, the center coordinates are positioned at coordinates (100, 100) in a case where the pixels are 200 by 200, for example. An equation of a circle having any three points of the four points on the outer circle which are determined in the above-mentioned manner is determined in accordance with a conventionally known method. As a result, outer-circle information including the center-coordinate position of the outer circle and the radius can be calculated, and the outer diameter can be calculated.

As described above, in this embodiment, the fertilized egg 16 is considered to have an approximately perfect spherical shape, and the focus position for imaging the fertilized egg 16 is determined on a basis of the calculation result of the outer diameter of the fertilized egg 16. Thus, it is easy to adjust the focus position. Further, it is unnecessary to take a long time to perform focus adjustment every time an image of the fertilized egg 16 growing up day by day is acquired. Thus, the work efficiency is improved. Further, variations in image quality which would be caused when different persons individually adjust the focus position to acquire images are not caused.

### (Second Embodiment)

Next, an image acquisition apparatus and an image processing method according to a second embodiment will be described.

In the first embodiment, the focus position is determined on a basis of the calculation result of the outer diameter of the fertilized egg 16 by referring to the focus table. In contrast, in this embodiment, the focus position is determined by using the culture vessel 1 including the above-mentioned focus adjustment marks on a basis of the calculation result of the outer diameter of the fertilized egg 16. Hereinafter, configurations similar to those of the first embodiment will be denoted by similar signs, detailed descriptions thereof will be omitted, and different points will be mainly described.

The culture vessel 1 and the image acquisition apparatus 2 have configurations similar to those of the first embodiment, and thus descriptions thereof will be omitted. It should be noted that in this embodiment, the culture vessel 1 including the focus adjustment marks 141a to 141f described in the first embodiment are used.

### <Configuration of Image Acquisition System>

Next, an image acquisition system in the above-mentioned image acquisition apparatus 2 will be described.

Fig. 6 is a diagram showing a configuration of an image acquisition system 4.

As shown in Fig. 6, the image acquisition system 4 includes the camera 25, the information processing apparatus 22, and the display apparatus 23.

The information processing apparatus 22 includes the image acquisition unit 221, the outer diameter calculation unit 223, a focus position determination unit 324, the imaging control unit 226, the display control unit 225, and the storage unit 222.

The image acquisition unit 221, the outer diameter calculation unit 223, the focus position determination unit 324, and the imaging control unit 226 are realized in such a manner that a program recorded on a ROM that is an example of a computer-readable non-transitory recording medium is loaded to a RAM and is executed by a CPU.

The focus position determination unit 324 determines the focus position of the camera 25 on a basis of the calculation result of the outer diameter of the fertilized egg 16. Specifically, the radius of the fertilized egg 16 is determined on a basis of the calculation result of the outer diameter of the fertilized egg 16. Then, any of the focus adjustment marks 141a to 141f, which is at a height moved by a distance corresponding to this radius upward (in the Z-axis direction) from the reference position 10 of the culture vessel 1 or which is at a height closest thereto, is determined as the focus position.

### <Image Acquisition Method>

Next, an image acquisition method by the above-mentioned image acquisition apparatus 2 will be described with reference to Figs. 5, 6, and 11.

In this embodiment, for each fertilized egg 16, the outer diameter is calculated and the focus position is determined on a basis of this outer diameter calculation result.

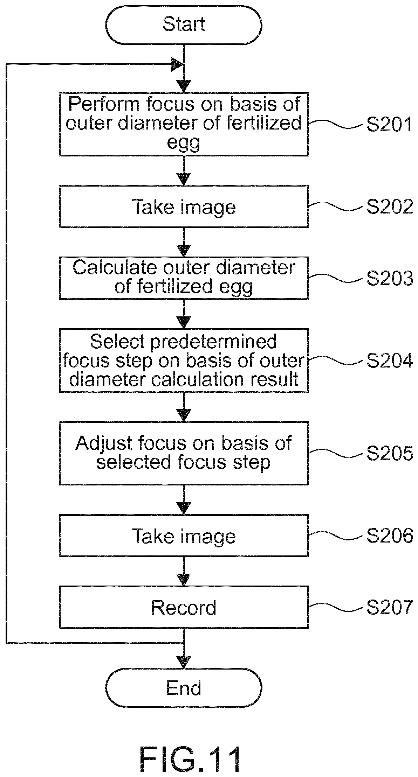

Fig. 11 is a flowchart of the image acquisition method according to this embodiment.

First of all, after the fertilized eggs 16 confirmed to be fertilized are put in the recesses 15 of the culture vessel 1 one by one, the culture medium 18 is injected into the recesses 15 and into the region surrounded by the inner wall 12 with a pipette. After that, the oil 17 is injected into the region surrounded by the inner wall 12 so as to cover the culture medium 18.

Next, the culture vessel 1 is horizontally disposed inside the culture apparatus 21 as shown in Fig. 5.

The image acquisition of the fertilized egg 16 is performed in a state in which the culture vessel 1 containing the fertilized eggs 16 is held inside the culture apparatus 21.

Next, light is emitted by the light source 24 from below the culture vessel 1, and the focus position is determined on a basis of the outer diameter of the fertilized egg (S201).

Next, the fertilized egg 16 is imaged by the camera 25 positioned above the culture vessel 1 (S202).

The captured image of the fertilized egg 16 is acquired by the image acquisition unit 221 as shown in Fig. 6. Next, the outer diameter calculation unit 223 calculates the outer diameter of the fertilized egg 16 on a basis of the image of the fertilized egg 16, which is acquired by the image acquisition unit 221 (S203). The outer diameter calculation method is similar to the method described in the first embodiment.

Next, the focus position determination unit 324 determines the radius of the fertilized egg 16 on a basis of the calculation result of the outer diameter of the fertilized egg 16. Then, one step of the focus adjustment steps 14, which is at a height moved by a distance corresponding to this radius upward in the Z-axis direction in the figure from the reference position 10 of the culture vessel 1 or which is at a largest height, is selected, and the focus adjustment mark added to this step is determined as the focus position (S204).

In this embodiment, the fertilized egg 16 is considered to have an approximately perfect spherical shape, and the radius of the fertilized egg 16 is determined on a basis of the outer diameter of the fertilized egg 16 having an approximately perfect circular shape as viewed from above. Then, by setting the position moved by a distance equal to this radius upward in the Z-direction from the reference position 10 of the recesses 15 of the culture vessel 1, with which the fertilized egg 16 is held in contact, as the focus position, setting can be made such that the focus position is located at the center of the fertilized egg 16 having an approximately perfect spherical shape.

Next, the imaging control unit 226 adjusts the focus position of the camera 25 to be the focus position determined by the focus position determination unit 324 (S205).

Next, the fertilized egg 16 is imaged at the determined focus position (S206), the image acquisition unit 221 acquires the captured image, and the storage unit 222 records the acquired image (S207). The display control unit 225 causes the display apparatus 23 to display the image acquired by the image acquisition unit 221.

The image of the fertilized egg 16 acquired at S206 is obtained by performing imaging with the center of the fertilized egg 16 being set as the focus position.

Those steps S201 to S207 are performed for each fertilized egg 16 to acquire images of the respective fertilized eggs 16. The image acquisition based on those steps of S201 to S207 is performed every arbitrary period, for example, at predetermined intervals such as at intervals of ten minutes or at intervals of one day or continuously, and how the fertilized eggs 16 are growing up can be observed. Further, if necessary, images may be acquired in real time and the state of the fertilized egg may be displayed on the display apparatus 23 and may be observed any time.

Alternatively, by performing the steps of S201 to S207 only one time, the focus position may be determined on a basis of the calculation result of the outer diameter of the fertilized egg 16 and the image may be acquired. Then, in image acquisition of the following fertilized egg 16, the focus position may be determined by using the focus adjustment mark provided in the culture vessel 1 without determining the focus position on a basis of the calculation result of the outer diameter.

That is, the growth curve drawn by the fertilized egg is approximately the same curve, and a change in size of the fertilized egg due to a change over time can be estimated in some degree. Thus, on a basis of the growth curve of the fertilized egg and the outer diameter of the fertilized egg on the first day immediately after fertilization, the elapsed time and the focus adjustment mark can be associated with each other.

For example, it is assumed that the diameter of the fertilized egg on the first day immediately after fertilization is 100 µm and a growth curve is drawn such that the fertilized egg grows up by 15 µm per day. In a case where the image acquisition is performed every day, a height c of each step of the focus adjustment steps 14 in which the focus adjustment marks 141a to 141f are formed is set to 15 µm, and thus the focus position on the first day can be set to the focus adjustment mark 141a, the focus position on the second day can be set to the focus adjustment mark 141b, the focus position on the third day can be set to the focus adjustment mark 141c, and the focus position on the fourth day can be set to focus adjustment mark 141d. In this case, on the second day and the following days, the steps of setting the focus position on a basis of the calculation result of the outer diameter as in S201 to S207 is unnecessary. The focus position adjustment is unnecessary, and how the fertilized eggs are growing up can be easily observed with the images. It should be noted that in the middle, for example, on the fourth day or the like, the steps like S201 to S207 may be provided for modifying the focus position as a matter of course.

As described above, in this embodiment, the fertilized egg 16 is considered to have an approximately perfect spherical shape, and the focus position for imaging the fertilized egg 16 is determined on a basis of the outer diameter of the fertilized egg 16. Thus, it is easy to adjust the focus position. Further, it is unnecessary to take a long time to perform focus adjustment every time an image of the fertilized egg 16 growing up day by day is acquired. Thus, the work efficiency is improved. Further, variations in image quality which would be caused due to operations made by different persons are not caused.

### (Third Embodiment)

Next, an image processing method according to a third embodiment will be described.

In the first embodiment, the focus position is determined on a basis of the calculation result of the outer diameter of the fertilized egg 16 by referring to the focus table, the images of the fertilized egg are acquired by performing this process every arbitrary period, and the growth of the fertilized egg is observed. In the second embodiment, in the first image acquisition, which focus adjustment mark of the focus adjustment marks 141a to 141f of the culture vessel 1 is used as the focus position is determined on a basis of the calculation result of the outer diameter, and thereafter, when/which focus adjustment mark is used is determined considering the growth curve of the fertilized egg, the image of the fertilized egg 16 is acquired, and the growth is observed.

In contrast, in this embodiment, by using the culture vessel 1 including the above-mentioned focus adjustment marks, in the first image acquisition, the image is acquired at the focus position determined by using the focus table shown in the first embodiment, and, in the following image acquisition, the image is acquired by using the focus adjustment mark of the culture vessel 1 shown in the second embodiment as the focus position. It should be noted that configurations similar to those of the above-mentioned embodiments will be denoted by similar signs, descriptions thereof will be omitted, and different points will be mainly described.

The culture vessel 1 and the image acquisition apparatus 2 have configurations similar to those of the first embodiment, and thus descriptions thereof will be omitted. It should be noted that in this embodiment, the culture vessel 1 including the focus adjustment marks 141a to 141f described in the first embodiment are used.

### <Configuration of Image Acquisition System>

Next, an image acquisition system in the above-mentioned image acquisition apparatus 2 will be described.

Fig. 6 is a diagram showing a configuration of an image acquisition system 5.

As shown in Fig. 6, the image acquisition system 5 includes the camera 25, the information processing apparatus 22, and the display apparatus 23.

The information processing apparatus 22 includes the image acquisition unit 221, the outer diameter calculation unit 223, a focus position determination unit 424, the imaging control unit 226, the display control unit 225, and the storage unit 222.

The focus position determination unit 424 determines the focus position of the camera 25 on a basis of the calculation result of the outer diameter of the fertilized egg 16. Specifically, by referring to the table generated in advance in which the plurality of different focus positions of the camera 25 and the outer diameters of the fertilized egg 16 are associated with each other, the calculation result of the outer diameter of the fertilized egg 16 is checked against the outer diameter in the table, and the focus position corresponding to the outer diameter is determined. In addition, the focus position determination unit 424 determines the focus position determined by referring to the focus table and the focus adjustment mark 141 of the culture vessel 1, which corresponds to this focus position.

The imaging control unit 226 adjusts the focus position of the camera 25 on a basis of the focus position information determined by the focus position determination unit 424.

### <Image Acquisition Method>

Next, an image acquisition method will be described with reference to Fig. 6.

In this embodiment, for each fertilized egg 16, the outer diameter is calculated and the focus position is determined on a basis of this outer diameter calculation result.

First of all, the fertilized eggs 16 confirmed to be fertilized are individually put in the recesses 15, and the culture vessel 1 in which the culture medium and the oil are injected is prepared. The culture vessel 1 is horizontally disposed on the stage 27 inside the culture apparatus 21.

The image acquisition of the fertilized egg 16 is performed in a state in which the culture vessel 1 containing the fertilized eggs 16 is held inside the culture apparatus 21.

Next, light is emitted by the light source 24 from below the culture vessel 1, and the focus position is determined on a basis of the outer diameter of the fertilized egg by using the autofocusing function of the camera 25.

Next, the fertilized egg 16 is imaged by the camera 25 positioned above the culture vessel 1.

The captured image of the fertilized egg 16 is acquired by the image acquisition unit 221 as shown in Fig. 6. Next, the outer diameter calculation unit 223 calculates the outer diameter of the fertilized egg 16 on a basis of the image of the fertilized egg 16, which is acquired by the image acquisition unit 221. The outer diameter calculation method is similar to the method described in the first embodiment.

Next, the focus position determination unit 424 refers to the focus table generated in advance, and determines the focus position of the camera 25 on a basis of the calculation result of the outer diameter of the fertilized egg 16, which is calculated by the outer diameter calculation unit 223. In the focus table, the plurality of focus positions different from each other and the outer diameters of the fertilized egg 16 are associated with each other.

In addition, the focus position determination unit 424 determines the focus position determined by referring to the focus table and the focus adjustment mark 141 corresponding to this focus position.

Next, the imaging control unit 226 controls the focus position of the camera 25 to be the focus position determined by the focus position determination unit 424.

Next, the fertilized egg 16 is imaged at the determined focus position, the image acquisition unit 221 acquires the captured image, and the storage unit 222 records the acquired image. The display control unit 225 causes the display apparatus 23 to display the image acquired by the image acquisition unit 221.

In the above-mentioned manner, the first image acquisition of the fertilized egg 16 is terminated.

In the second and subsequent image acquisition of the fertilized egg 16, the focus position of the camera 25 is determined by using the focus adjustment mark 141 of the culture vessel 1. That is, as also described in the second embodiment, the growth curve drawn by the fertilized egg 16 is approximately the same curve, and a change in size of the fertilized egg 16 due to a change over time can be estimated in some degree. Therefore, by using the focus adjustment mark 141 of the culture vessel 1, which corresponds to the focus position determined in the first image acquisition, as a reference, on a basis of the growth curve of the fertilized egg, the elapsed time and each focus adjustment mark can be associated with each other.

With this configuration, in the second and subsequent image acquisition, it is unnecessary to perform the calculation process of the outer diameter of the fertilized egg 16 and the determination process of the focus position based on the calculation result of the outer diameter.

The above-mentioned steps are performed for each fertilized egg 16. The image acquisition can be performed at predetermined intervals, for example, every arbitrary period such as ten minutes or one day, or continuously, and how the fertilized eggs 16 are growing up can be observed.

As described above, the image can be acquired by combining the method of acquiring the image by referring to the focus table and determining the focus position on a basis of the calculation result of the outer diameter with the method of acquiring the image by setting any one of the focus adjustment marks 141a to 141f of the culture vessel 1 as the focus position.

### (Fourth Embodiment)

Next, an image processing method according to a fourth embodiment will be described.

In the first embodiment, the image is acquired by determining the focus position for each fertilized egg 16. In contrast, this embodiment is mainly different from the first embodiment in that the image is acquired by collectively imaging the plurality of fertilized eggs 16 for each of the plurality of focus positions. In this embodiment, by processing the image collectively captured for each of the plurality of focus positions, one image suitable for the outer diameter calculation is selected for each fertilized egg 16, the outer diameter of the fertilized egg is calculated on a basis of this image, and the focus position is determined on a basis of this calculation result of the outer diameter.

It should be noted that in this embodiment, a case where all the nine fertilized eggs 16 put in the single culture vessel 1 are collectively imaged is described as an example for imaging by the camera 25 for selecting the image suitable for the outer diameter calculation, though not limited thereto. For example, four fertilized eggs 16 may be collectively imaged or a single fertilized egg 16 may be imaged. Further, the number of fertilized eggs 16 within an imaging field of view may be arbitrarily modified.

Hereinafter, configurations similar to those of the first embodiment will be denoted by similar signs and detailed descriptions thereof will be omitted.

The culture vessel 1 and the image acquisition apparatus 2 have configurations similar to those of the first embodiment, and thus descriptions thereof will be omitted. It should be noted that in this embodiment, the culture vessel 1 including the focus adjustment marks 141a to 141f described in the first embodiment does not need to be used, and various culture vessels can be used.

### <Configuration of Image Acquisition System>

Next, an image acquisition system in the above-mentioned image acquisition apparatus 2 will be described.

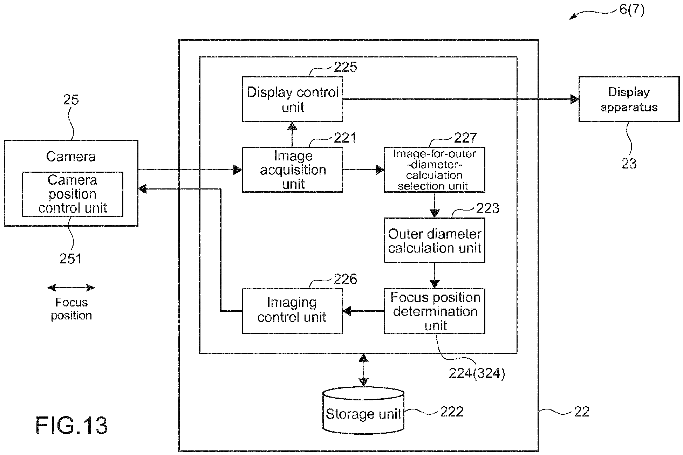

Fig. 13 is a diagram showing a configuration of an image acquisition system 6.

As shown in Fig. 13, the image acquisition system 3 includes the camera 25, the information processing apparatus 22, and the display apparatus 23.

The information processing apparatus 22 includes the image acquisition unit 221, an image-for-outer-diameter-calculation selection unit 227, the outer diameter calculation unit 223, the focus position determination unit 224, the imaging control unit 226, the display control unit 225, and the storage unit 222.

The image acquisition unit 221 acquires the image captured by the camera 25 from the camera 25.

The image-for-outer-diameter-calculation selection unit 227 selects, from images obtained by the camera 25 collectively imaging a plurality of fertilized eggs 16, here, nine fertilized eggs 16 for each of different focus positions, an image suitable for the outer diameter calculation for each fertilized egg 16.

The outer diameter calculation unit 223 calculates the outer diameter of the fertilized egg 16 on a basis of the image selected by the image-for-outer-diameter-calculation selection unit 227.

The focus position determination unit 224 determines the focus position of the camera 25 on a basis of the calculation result of the outer diameter of the fertilized egg 16. Specifically, by referring to the table generated in advance in which the plurality of different focus positions of the camera 25 and the outer diameters of the fertilized egg 16 are associated with each other, the calculation result of the outer diameter of the fertilized egg 16 is checked against the outer diameter in the table, and the focus position corresponding to the outer diameter is determined.

The imaging control unit 226 adjusts the focus position of the camera 25 on a basis of the focus position information determined by the focus position determination unit 224.

The display control unit 225 outputs the image information signal for causing the display apparatus 23 to display the image acquired by the image acquisition unit 221 to the display apparatus 23.

The storage unit 222 stores the image information acquired by the image acquisition unit 221.

### <Image Acquisition Method>

Next, an image acquisition method will be described with reference to Figs. 7, 12, and 13.

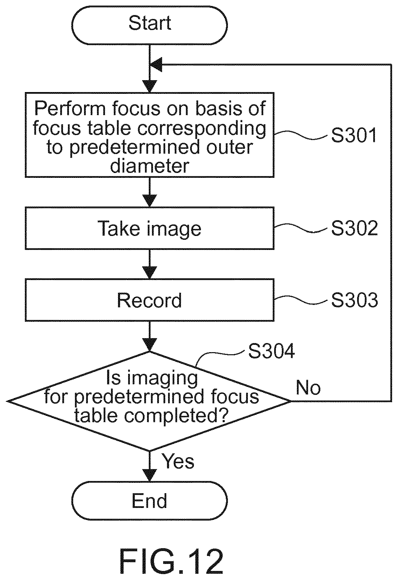

Fig. 12 is a flowchart of the method of acquiring images for selecting an image for outer diameter calculation.

It should be noted that although in this embodiment, the case where the culture vessel 1 including the focus adjustment marks 141a to 141f is used is exemplified, the image can also be acquired in accordance with the image acquisition method of this embodiment by using a culture vessel including no focus adjustment marks.

First of all, the fertilized eggs 16 confirmed to be fertilized are individually put in the recesses 15, and the culture vessel 1 in which the culture medium and the oil are injected is prepared. The culture vessel 1 is horizontally disposed on the stage 27 inside the culture apparatus 21.

The image acquisition of the fertilized egg 16 is performed in a state in which the culture vessel 1 containing the fertilized eggs 16 is held inside the culture apparatus 21. Next, light is emitted by the light source 24 from below the culture vessel 1, focusing is performed at one focus position of the plurality of different focus positions included in the focus table (S301), and the nine fertilized eggs 16 are collectively imaged by the camera 25 (S302). The captured image is recorded in the storage unit 222 (S303). In the focus table, the plurality of predetermined focus positions different from each other and the outer diameters of the fertilized egg 16 are associated with each other.

Next, if imaging for each of the plurality of predetermined focus positions in the focus table is not completed (No in S304), the processing is returned to S301, focusing is performed at the focus position at which the imaging is not completed (S301), and the nine fertilized eggs 16 are collectively imaged by the camera 25 (S302). The captured image is recorded in the storage unit 222 (S303). S301 to S303 are repeated until imaging for all the focus positions in the focus table is completed. It should be noted that, for example, those of the captured images of each fertilized egg 16, which are optimal in terms of trimming, outer diameter calculation, and a focus value may be selectively recorded in the storage unit 222.

When the imaging for each of all the focus positions included in the focus table is completed (Yes in S304), the acquisition of images for selecting an image for outer diameter calculation is terminated. With this configuration, for example, in a case where six focus positions are included in the focus table, six images are obtained for each fertilized egg 16.

Next, the image-for-outer-diameter-calculation selection unit 227 selects one image suitable for the outer diameter calculation from the obtained six images for each fertilized egg 16. Regarding the selection method, for example, one having a sharpest outline edge is selected. Specifically, the outline portion of the fertilized egg in each of the six images is detected, one having a sharpest edge of that outline portion is considered as being well focused, and it is selected.

Next, the outer diameter calculation unit 223 calculates the outer diameter of the fertilized egg 16 on a basis of the selected image of the fertilized egg 16 (S103). The outer diameter calculation method is similar to the method shown in the first embodiment.

Next, the focus position determination unit 224 refers to the focus table generated in advance, and determines the focus position of the camera 25 on a basis of the calculation result of the outer diameter of the fertilized egg 16, which is calculated by the outer diameter calculation unit 223 (S104). In the focus table, the plurality of focus positions of the camera 25 which are different from each other and the outer diameters of the fertilized egg 16 are associated with each other.

Next, the imaging control unit 226 controls the focus position of the camera 25 to be the focus position determined by the focus position determination unit 224 (S105).

Next, the fertilized egg 16 is imaged at the determined focus position (S106), the image acquisition unit 221 acquires the captured image, and the storage unit 222 records the acquired image (S107). The display control unit 225 causes the display apparatus 23 to display the image acquired by the image acquisition unit 221.

Those steps S103 to S107 are performed for each fertilized egg 16 and the fertilized egg 16 is imaged at the determined focus position. In this manner, the images of all the fertilized egg 16 are acquired.

Then, the steps of S201 to S207, the step of selecting the one image suitable for the outer diameter calculation from the acquired six images, and the steps of S201 to S207 which are described above are performed every arbitrary period, for example, at predetermined intervals such as ten minutes or one day, or continuously. In this manner, the images of the fertilized eggs 16 are acquired. With this configuration, how the fertilized eggs 16 are growing up can be observed.

It should be noted that when the nine fertilized eggs 16 are collectively imaged, imaging for a focus position corresponding to an outer diameter smaller than that of a fertilized egg slowest in the growth of the fertilized egg, i.e., having a smallest outer diameter may be set not to be performed thereafter. With this configuration, the number of times of unnecessary imaging can be reduced, and damage of the fertilized eggs due to the light irradiation of the imaging can be reduced.

In this embodiment, the one having the sharpest outline edge is selected by the image-for-outer-diameter-calculation selection unit 227 as the one image suitable for the outer diameter calculation and the outer diameter calculation is performed by the outer diameter calculation unit 223 on a basis of the selected image, though not limited thereto.

For example, several images, for example, two to three images of the six images obtained for each fertilized egg 16, which have a shaper outline edge, may be selected, and the outer diameters may be respectively calculated on a basis of those images, the mean of those calculation results of the outer diameters may be calculated, and it may be used as the outer diameter for determining the focus position.

Alternatively, differences of the images between adjacent pairs (five pairs) of the six images obtained for each fertilized egg 16 may be calculated. Then, the size of the outline of the fertilized egg extracted from a luminance-difference image having a largest luminance difference at the outer circumferential portion of the fertilized egg 16 in those difference images may be used as the diameter of that fertilized egg 16. In this manner, the outer diameter may be calculated.

Alternatively, differences of the images between adjacent pairs (five pairs) of the six images obtained for each fertilized egg 16 may be calculated. Then, an image in which the size of the outline of the fertilized egg 16 is smallest in those difference images may be used as the diameter of the fertilized egg. It is because it is considered that the size of the fertilized egg can appear larger when focusing is not well done, and thus it is considered that when the smallest image is selected, it is appropriate for the size of the fertilized egg.

### (Fifth Embodiment)

Next, an image processing method according to a fifth embodiment will be described.

In the fourth embodiment, the nine fertilized eggs are collectively imaged for each of the focus positions in the focus table. In contrast, in this embodiment, the nine fertilized eggs are collectively imaged for each of the focus adjustment marks 141a to 141f by using the culture vessel 1. Hereinafter, configurations similar to those of the above-mentioned embodiments will be denoted by similar signs and detailed descriptions thereof will be omitted.

The culture vessel 1 and the image acquisition apparatus 2 have configurations similar to those of the first embodiment, and thus descriptions thereof will be omitted.

### <Configuration of Image Acquisition System>

Next, an image acquisition system in the above-mentioned image acquisition apparatus 2 will be described.

Fig. 13 is a diagram showing a configuration of an image acquisition system 7.

As shown in Fig. 13, the image acquisition system 3 includes the camera 25, the information processing apparatus 22, and the display apparatus 23.

The information processing apparatus 22 includes the image acquisition unit 221, the image-for-outer-diameter-calculation selection unit 227, the outer diameter calculation unit 223, the focus position determination unit 324, the imaging control unit 226, the display control unit 225, and the storage unit 222.

The image acquisition unit 221 acquires the image captured by the camera 25 from the camera 25.

The image-for-outer-diameter-calculation selection unit 227 selects, from images obtained by the camera 25 collectively imaging a plurality of fertilized eggs 16, here, nine fertilized eggs 16 for each of different focus positions, an image suitable for the outer diameter calculation for each fertilized egg 16.

The outer diameter calculation unit 223 calculates the outer diameter of the fertilized egg 16 on a basis of the image selected by the image-for-outer-diameter-calculation selection unit 227.

The focus position determination unit 324 determines the radius of the fertilized egg 16 on a basis of the calculation result of the outer diameter of the fertilized egg 16. Then, one step of the focus adjustment steps 14, which is at a height moved by a distance corresponding to this radius upward in the Z-axis direction in the figure from the reference position 10 of the culture vessel 1 or which is at a height closest thereto, is selected, and the focus adjustment mark added to this step is determined as the focus position.

The imaging control unit 226 adjusts the focus position of the camera 25 on a basis of the focus position information determined by the focus position determination unit 324.

The display control unit 225 outputs the image information signal for causing the display apparatus 23 to display the image acquired by the image acquisition unit 221 to the display apparatus 23.

The storage unit 222 stores the image information acquired by the image acquisition unit 221.

### <Image Acquisition Method>

Next, an image acquisition method will be described with reference to Figs. 11, 13, and 14.

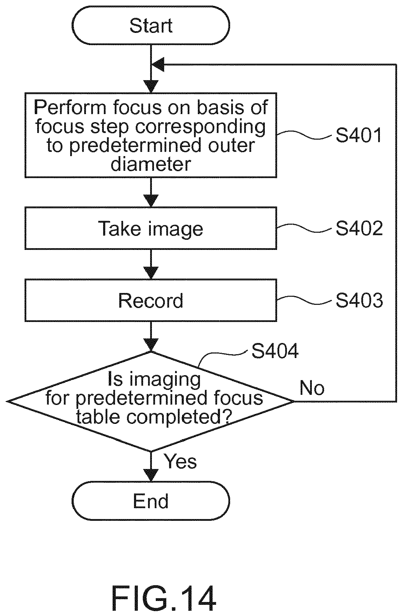

Fig. 14 is a flowchart of the method of acquiring images for selecting an image for outer diameter calculation.

First of all, the fertilized eggs 16 confirmed to be fertilized are individually put in the recesses 15, and the culture vessel 1 in which the culture medium and the oil are injected is prepared.

The image acquisition of the fertilized egg 16 is performed in a state in which the culture vessel 1 containing the fertilized eggs 16 is held inside the culture apparatus 21.

Next, light is emitted by the light source 24 from below the culture vessel 1, focusing is performed by using one of the focus adjustment marks 141 formed in the culture vessel 1, for example, the focus adjustment mark 141a as the focus position (S401), and the nine fertilized eggs 16 are collectively imaged by the camera 25 (S402). The captured image is recorded in the storage unit 222 (S403).

Next, if imaging for each of the focus adjustment marks 141a to 141f is not completed (No in S404), the processing is returned to S401, focusing is performed by using the focus adjustment mark 141b for which the imaging is not completed as the focus position (S401), and the nine fertilized eggs 16 are collectively imaged by the camera 25 (S402). The captured image is recorded in the storage unit 222 (S403). S401 to S403 are repeated until imaging for all the focus adjustment marks 141a to 141f is completed. It should be noted that, for example, those of the captured images of each fertilized egg 16, which are optimal in terms of trimming, outer diameter calculation, and a focus value may be selectively recorded in the storage unit 222.

When the imaging for each of the focus adjustment marks 141a to 141f is all completed (Yes in S404), the acquisition of images for selecting an image for outer diameter calculation is terminated. With this configuration, the images in which the nine fertilized eggs 16 are collectively captured for each of the six focus adjustment marks 141a to 141f are obtained. Therefore, the six images are obtained for each fertilized egg 16.

Next, the image-for-outer-diameter-calculation selection unit 227 selects one image suitable for the outer diameter calculation from the obtained six images for each fertilized egg 16. A method similar to that of the fourth embodiment can be used as the selection method.

Next, the outer diameter calculation unit 223 calculates the outer diameter of the fertilized egg 16 on a basis of the selected image of the fertilized egg 16 (S203). The outer diameter calculation method is similar to the method shown in the first embodiment.

Next, the focus position determination unit 324 determines the radius of the fertilized egg 16 on a basis of the calculation result of the outer diameter of the fertilized egg 16. Then, one step of the focus adjustment steps 14, which is at a height moved by a distance corresponding to this radius upward in the Z-axis direction in the figure from the reference position 10 of the culture vessel 1 or which is at a height closest thereto, is selected, and the focus adjustment mark 141 added to this step is determined as the focus position (S204).

Next, the imaging control unit 226 controls the focus position of the camera 25 to be the focus position determined by the focus position determination unit 324 (S205).

Next, the fertilized egg 16 is imaged at the determined focus position (S206), the image acquisition unit 221 acquires the captured image, and the storage unit 222 records the acquired image (S207). The display control unit 225 causes the display apparatus 23 to display the image acquired by the image acquisition unit 221.

Those steps S201 to S207 are performed for each fertilized egg 16 and the fertilized egg 16 is imaged at the determined focus position. In this manner, the images of all the fertilized egg 16 are acquired.

Then, the steps of S201 to S207, the step of selecting the one image suitable for the outer diameter calculation from the acquired six images, and the steps of S201 to S207 which are described above are performed every arbitrary period, for example, at predetermined intervals such as ten minutes or one day, or continuously. In this manner, the images of the fertilized eggs 16 are acquired. With this configuration, how the fertilized eggs 16 are growing up can be observed.

It should be noted that when the nine fertilized eggs 16 are collectively imaged, imaging for a focus adjustment mark corresponding to an outer diameter smaller than that of a fertilized egg slowest in the growth of the fertilized egg, i.e., having a smallest outer diameter may be set not to be performed thereafter. With this configuration, the number of times of unnecessary imaging can be reduced, and damage of the fertilized eggs due to the light irradiation of the imaging can be reduced.

### (Sixth Embodiment)

Calibration may be performed by using the focus adjustment step 14 of the above-mentioned culture vessel 1 and the image acquisition process may be performed after that. In this embodiment, a case where the calibration process is performed before the collective imaging process described in the fourth embodiment is performed will be described as an example.

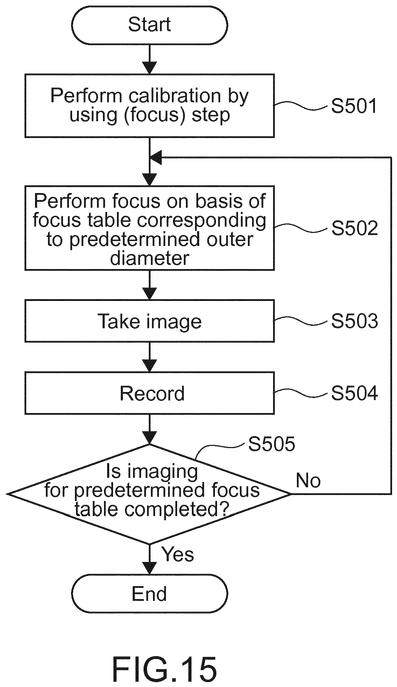

Fig. 15 is a flowchart of the method of acquiring images for selecting an image for outer diameter calculation which includes the calibration process. Hereinafter, the description will be made in accordance with the flowchart of Fig. 15.

First of all, the fertilized eggs 16 confirmed to be fertilized are individually put in the recesses 15, and the culture vessel 1 in which the culture medium and the oil are injected is prepared.

Next, calibration is performed by using the focus adjustment step 14 of the culture vessel 1 as a reference (S501). The calibration result is recorded in the storage unit 222 as data specific to the camera 25 to be used.

Next, light is emitted by the light source 24 from below the culture vessel 1, focusing is performed at one focus position of the plurality of different focus positions included in the focus table (S502), and the nine fertilized eggs 16 are collectively imaged by the camera 25 (S503). The captured image is recorded in the storage unit 222 (S504). In the focus table, the plurality of predetermined focus positions different from each other and the outer diameters of the fertilized egg 16 are associated with each other.

Next, if imaging for each of the plurality of predetermined focus positions in the focus table is not completed (No in S505), the processing is returned to S502, focusing is performed at the focus position at which the imaging is not completed (S502), and the nine fertilized eggs 16 are collectively imaged by the camera 25 (S503). The captured image is recorded in the storage unit 222. S502 to S505 are repeated until imaging for the focus table is completed.

When the imaging for each of the plurality of predetermined focus positions included in the focus table is completed (Yes in S505), the acquisition of images for selecting an image for outer diameter calculation is terminated. With this configuration, for example, in a case where there are six focus tables, six images are obtained for each fertilized egg 16.

Next, the image-for-outer-diameter-calculation selection unit 227 selects one image suitable for the outer diameter calculation from the obtained six images for each fertilized egg 16. The selection method is similar to that of the fourth embodiment.

Next, the outer diameter calculation unit 223 calculates the outer diameter of the fertilized egg 16 on a basis of the selected image of the fertilized egg 16. The outer diameter calculation method is similar to the method shown in the first embodiment.

Next, the focus position determination unit 224 refers to the focus table generated in advance, and determines the focus position of the camera 25 on a basis of the calculation result of the outer diameter of the fertilized egg 16, which is calculated by the outer diameter calculation unit 223, in view of the calibration result recorded in the storage unit 222. In the focus table, the plurality of focus positions of the camera 25 which are different from each other and the outer diameters of the fertilized egg 16 are associated with each other.

Next, the imaging control unit 226 controls the focus position of the camera 25 to be the focus position determined by the focus position determination unit 224.

Next, the fertilized egg 16 is imaged at the determined focus position, the image acquisition unit 221 acquires the captured image, and the storage unit 222 records the acquired image. The display control unit 225 causes the display apparatus 23 to display the image acquired by the image acquisition unit 221.

In this manner, the focus adjustment step 14 of the culture vessel 1 can also be used for calibration. Thus, the focus adjustment accuracy is improved.

Further, in observation of the fertilized egg 16, the embryologist can regularly take out the culture vessel 1 from the culture apparatus 21 for observing it with a microscope. By performing calibration by using the focus adjustment step 14 of the culture vessel 1 again when the culture vessel 1 is returned to the culture apparatus 21 after taking out it, displacement of the focus due to the re-install can be reduced.

### (Seventh Embodiment)

Next, an image acquisition apparatus having configurations different from those of the image acquisition apparatus 2 will be described as a seventh embodiment. It should be noted that the configurations of the image acquisition apparatus are not limited thereto.

In the above-mentioned embodiments, regarding the image acquisition apparatus 2 that observes the fertilized eggs, the culture vessel 1 and the camera 25 are installed inside the culture apparatus 21 and the information processing apparatus 22 is installed outside the culture apparatus 21, though not limited thereto. For example, as shown in Fig. 16, the culture vessel 1, a camera 323, and an information processing apparatus 322 may be installed inside a culture apparatus 31.

Fig. 16 shows a configuration of an image acquisition apparatus 8 according to the seventh embodiment.

As shown in Fig. 16, the image acquisition apparatus 8 includes the culture apparatus 31, an integrated camera-information processing apparatus unit 32, and a temperature and humidity control unit 36. The image acquisition apparatus 8 is connectable to a cloud server 37 via a network. In addition, a portable terminal 38 and a personal computer 39 are connectable to the cloud server 37 via the network.

The culture apparatus 31 is a chamber that houses the culture vessel 1 containing the fertilized eggs 16 and cultures the fertilized eggs 16. The culture vessel 1 is held horizontally inside the culture apparatus 31.

The camera-information processing apparatus unit 32 is installed inside the culture apparatus 31.

The camera-information processing apparatus unit 32 includes the camera 323 as the imaging unit, a light source 321, the information processing apparatus 322, and a communication unit 325. In this embodiment, the light source 321 for light which with the fertilized eggs 16 are irradiated is arranged above the culture apparatus 1, not below the culture apparatus 1.

The light source 321 emits light with which the culture vessel 1 is to be irradiated when the fertilized eggs 16 in the culture vessel 1 are imaged by the camera 25.

The camera 323 images the fertilized eggs 16 in the culture vessel 1. The camera 323 is movable in the Z-axis direction of the figure, i.e., in a focus depth direction and is fixed not to be movable in the horizontal plane direction.

The information processing apparatus 322 calculates an outer diameter of the fertilized egg 16 on a basis of the image information acquired by the camera 323, and determines a focus position of the camera 323 which is suitable for the image acquisition of the fertilized egg 16 on a basis of the calculation result thereof. Further, the information processing apparatus 322 outputs the image data of the fertilized egg 16 to the cloud server 37 via the communication unit 325 and the network.

The temperature and humidity control unit 36 controls the temperature and humidity inside the culture apparatus 31 and forms an environment suitable for culturing the fertilized eggs 16. The temperature and humidity control unit 36 is arranged inside the culture apparatus 31.

The communication unit 325 receives an image data signal of the fertilized egg 16 which is stored in the information processing apparatus 322 and outputs it to the cloud server 37 via the network.

The cloud server 37 stores the image data of the fertilized egg 16.

The personal computer 39 including a display unit 39a and an information processing unit 39b and the portable terminal 38 receive and display the image data of the fertilized egg 16 from the cloud server 37 via the network in accordance with an operation by the user who operates them.

### (Eighth Embodiment)

Although in the first embodiment, focusing is performed on a basis of the outer diameter of the fertilized egg 16 in the step of S101 of Fig. 7, only in the first image acquisition, the image of the fertilized egg 16 may be displayed on the display apparatus 23 and the observer may adjust the focus position while viewing that image. Then, in the second and subsequent image acquisition, the image may be acquired through the steps of Fig. 7. Hereinafter, a case where of performing the first image acquisition while viewing the image of the display apparatus 23 will be described as an eighth embodiment.

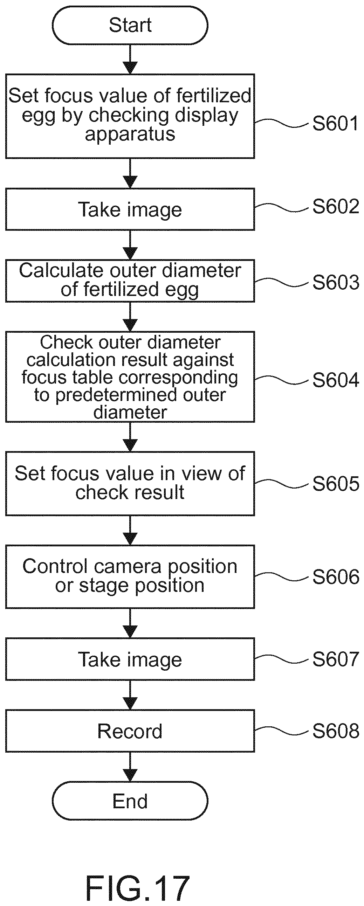

Fig. 17 is a flowchart showing a method for first image acquisition associated with the eighth embodiment.

The description will be made in accordance with the flowchart of Fig. 17.

First of all, the culture vessel 1 containing the fertilized egg 16 is disposed on the stage 27 inside the culture apparatus 21.

Next, light is emitted by the light source 24 from below the culture vessel 1, the fertilized egg 16 is imaged by the camera 25, and the captured image is displayed on the display apparatus 23. The observer adjusts the focus while viewing the image of the fertilized egg 16 which is displayed on the display apparatus 23 and sets an initial focus position of the camera 25 (S601).

Here, when adjusting the focus while viewing the image in a case where the culture vessel 1 including the above-mentioned focus adjustment marks 141a to 141f is used as the culture vessel, it is also possible to set a rough focus position by using the focus adjustment marks 141a to 141f and then adjust it.

For example, the diameter of the fertilized egg immediately after fertilization is about 100 µm. Thus, it is assumed that the center position of this fertilized egg is located near a position moved by 50 µm upward in the Z-axis direction from the reference position 10, i.e., near the position of the focus adjustment mark 141a. Therefore, after that rough focus position is determined by using the focus adjustment mark 141a while viewing the image, the focus position can be adjusted.

Next, the fertilized egg 16 is imaged by the camera 25 positioned above the culture vessel 1 (S602).

The captured image of the fertilized egg 16 is acquired by the image acquisition unit 221. Next, the outer diameter calculation unit 223 calculates the outer diameter of the fertilized egg 16 on a basis of the image of the fertilized egg 16, which is acquired by the image acquisition unit 221 (S603). The outer diameter calculation method is similar to the method shown in the first embodiment.

Next, the focus position determination unit 224 refers to the focus table generated in advance, and determines the focus position of the camera 25 on a basis of the calculation result of the outer diameter of the fertilized egg 16, which is calculated by the outer diameter calculation unit 223 (S604). In the focus table, the plurality of focus positions of the camera 25 which are different from each other and the outer diameters of the fertilized egg 16 are associated with each other.

Next, the imaging control unit 226 outputs a focus position information signal to the camera position control unit 251 such that the focus position of the camera 25 becomes the focus position determined by the focus position determination unit 224 (S605).

Next, the camera position control unit 251 adjusts the focus position by moving the lens position or the stage of the camera on a basis of the focus position information signal from the imaging control unit 226 (S606).

Next, the fertilized egg 16 is imaged at the determined focus position (S607), the image acquisition unit 221 acquires the captured image, and the storage unit 222 records the acquired image (S608). The display control unit 225 causes the display apparatus 23 to display the image acquired by the image acquisition unit 221.

The image of the fertilized egg 16 acquired at S607 is obtained by performing imaging with the center of the fertilized egg 16 being set as the focus position.

Those steps S601 to S608 are performed for each fertilized egg 16 and the images of the respective fertilized eggs 16 in the first image acquisition are acquired.

Then, by performing the steps of S201 to S207 shown in Fig. 7 every arbitrary period, for example, at predetermined intervals such as at intervals of ten minutes or every other day, or continuously, the images in the second and subsequent image acquisition are acquired. With this configuration, how the fertilized eggs 16 are growing up can be observed. Further, if necessary, images may be acquired in real time and the state of the fertilized egg may be displayed on the display apparatus 23 and may be observed any time.

In this manner, the focus position can also be set by the observer only in the first image acquisition.

Here, the eighth embodiment has been described as a modified example of the first embodiment. Similarly, also regarding the second embodiment, the observer may set the focus position only in the first image acquisition and the second and subsequent image acquisition may be performed through the steps shown in Fig. 11. In this case, in the first image acquisition, after the observer sets the focus position, the steps of S201 to S207 shown in Fig. 11 are performed.

Although the respective embodiments and the respective modified examples of the present technology have been described above, the present technology is not limited only to the above-mentioned embodiments and various modifications can be made without departing from the gist of the present technology as a matter of course.

It should be noted that the present technology may also take the following configurations.
(1) An image acquisition method, including:
   acquiring, by an imaging unit, an image of a cell in a culture vessel including a recess containing the cell;
   calculating an outer diameter of the cell on a basis of the image acquired by the imaging unit; and
   determining a focus position of the imaging unit on a basis of the calculation result of the outer diameter by referring to a table in which the plurality of focus positions of the imaging unit, which are different from each other, and outer diameters of the cell are associated with each other, the table being generated in advance.
(2) The image acquisition method according to (1), in which
   the acquisition of the image of the cell by the imaging unit is performed from above while the culture vessel is arranged in a horizontal plane, and
   the focus position is at a position moved from a reference position upward in a direction perpendicular to the horizontal plane by a distance equal to a radius determined on a basis of the calculated outer diameter of the cell, the reference position being a lowest position of the recess.
(3) The image acquisition method according to (1) or (2), in which
   the image of the cell is acquired by the imaging unit, the outer diameter of the cell is calculated on a basis of the image acquired by the imaging unit, the focus position of the imaging unit is determined on a basis of the calculation result of the outer diameter by referring to the table, and the image of the cell is acquired by the imaging unit at the determined focus position every arbitrary period.
(4) The image acquisition method according to (1) or (2), in which
   the culture vessel further includes a plurality of focus adjustment marks arranged at positions outside the recess such that the plurality of focus adjustment marks are different in height from each other, the positions being higher than the lowest position of the recess and lower than a highest position of the recess, and
   the focus position of the imaging unit is determined by using the focus adjustment mark and the image of the cell is acquired by the imaging unit at the determined focus position every arbitrary period after the determination of the focus position is performed by referring to the table.
(5) The image acquisition method according to any one of (1) to (4), in which
   the culture vessel further includes a plurality of focus adjustment marks arranged at positions outside the recess such that the plurality of focus adjustment marks are different in height from each other, the positions being higher than the lowest position of the recess and lower than a highest position of the recess,
   the imaging unit is calibrated by using the focus adjustment mark of the culture vessel as a reference before the acquisition of the image of the cell, and
   the determination of the focus position of the imaging unit is performed in view of the calibration result.
(6) The image acquisition method according to any one of (1) to (5), in which
   the culture vessel includes a plurality of recesses that individually contain a plurality of cells,
   the acquisition of the image of the cell by the imaging unit is performed by collectively imaging the plurality of cells for each of the plurality of focus positions different from each other, the plurality of focus positions being included in the table,
   one image for the outer diameter calculation is selected from the image result acquired for each of the plurality of focus positions different from each other, for each of the cells, and
   the calculation of the outer diameter of the cell is performed based on the image selected for the outer diameter calculation.
(7) An image acquisition method, including:
   acquiring, by an imaging unit, an image of a cell in a culture vessel, the culture vessel including a recess containing the cell, and a plurality of focus adjustment marks arranged at positions outside the recess such that the plurality of focus adjustment marks are different in height from each other, the positions being higher than a lowest position of the recess and lower than a highest position of the recess;
   calculating an outer diameter of the cell on a basis of the image acquired by the imaging unit;
   selecting one focus adjustment mark from the plurality of focus adjustment marks on a basis of the calculation result of the outer diameter; and
   acquiring, by the imaging unit, an image of the cell by using the focus adjustment mark as a focus position.
(8) The image acquisition method according to (7), in which
   the outer diameter of the cell is calculated on a basis of the image obtained by the imaging unit, the one focus adjustment mark from the plurality of focus adjustment marks is determined on a basis of the calculation result of the outer diameter, and the focus adjustment mark is used as the focus position every arbitrary period.
(9) The image acquisition method according to (7) or (8), in which
   the culture vessel includes a plurality of recesses that individually contain a plurality of cells,
   the acquisition of the image of the cell by the imaging unit is performed by collectively imaging the plurality of cells for each of the focus adjustment marks,
   one image for the outer diameter calculation is selected from the image result acquired for each of the focus adjustment marks, for each of the cells, and
   the calculation of the outer diameter of the cell is performed based on the image selected for the outer diameter calculation.
(10) An image acquisition apparatus, including:
   an imaging unit that images a cell in a culture vessel including a recess containing the cell;
   a calculation unit that calculates an outer diameter of the cell on a basis of the image acquired by the imaging unit; and
   a determination unit that determines a focus position of the imaging unit on a basis of the calculation result of the outer diameter by referring to a table in which the focus position of the imaging unit and the outer diameter of the cell are associated with each other, the table being generated in advance.
(11) An image acquisition apparatus, including:
   an imaging unit that images a cell in a culture vessel, the culture vessel including a recess containing the cell, and a plurality of focus adjustment marks arranged at positions outside the recess such that the plurality of focus adjustment marks are different in height from each other, the positions being higher than a lowest position of the recess and lower than a highest position of the recess;
   a calculation unit that calculates an outer diameter of the cell on a basis of an image acquired by the imaging unit; and
   a determination unit that determines one focus adjustment mark from the plurality of focus adjustment marks on a basis of the calculation result of the outer diameter.
(12) The image acquisition apparatus according to (10) or (11), further including
   a culture apparatus that contains the culture vessel.
(13) A program that causes an information processing apparatus to function as:
   an image acquisition unit that acquires an image of a cell in a culture vessel including a recess containing the cell, the image being taken by an imaging unit;
   a calculation unit that calculates an outer diameter of the cell on a basis of the acquired image of the cell; and
   a determination unit that determines a focus position of the imaging unit on a basis of the calculation result, in which
   the determination unit determines the focus position of the imaging unit on a basis of the calculation result of the outer diameter, which is obtained by the calculation unit, by referring a table in which focus positions of the imaging unit, which are different from each other, and outer diameters of the cell are associated with each other, the table being generated in advance.
(14) A program that causes an information processing apparatus to function as:
   an image acquisition unit that acquires an image of a cell in a culture vessel, the culture vessel including a recess containing the cell, and a plurality of focus adjustment marks arranged at positions outside the recess such that the plurality of focus adjustment marks are different in height from each other, the positions being higher than a lowest position of the recess and lower than a highest position of the recess, the image being taken by an imaging unit;
   a calculation unit that calculates an outer diameter of the cell on a basis of the acquired image of the cell; and
   a determination unit that determines a focus position of the imaging unit on a basis of the calculation result, in which
   the determination unit determines one focus adjustment mark from the plurality of focus adjustment marks on a basis of the calculation result of the outer diameter which is obtained by the calculation unit.
(15) A culture vessel, including:
   a recess group including a plurality of recesses that individually contain a plurality of cells; and
   a plurality of focus adjustment marks arranged at positions outside the recess group such that the plurality of focus adjustment marks are different in height from each other, the positions being higher than a lowest position of the recess and lower than a highest position of the recess.

### Reference Signs List

1 culture vessel
2, 8 image acquisition apparatus
10 reference position
14 cell rotation apparatus
15 recess
16 fertilized egg
21, 31 culture apparatus
25, 323 camera
141a to 141f focus adjustment mark
221 image acquisition unit
223 outer diameter calculation unit
224, 324, 424 focus position determination unit

## Claims

1. An image acquisition method, comprising:
acquiring, by an imaging unit, an image of a cell in a culture vessel including a recess containing the cell;
calculating an outer diameter of the cell on a basis of the image acquired by the imaging unit; and
determinining a focus position of the imaging unit on a basis of the calculation result of the outer diameter by referring to a table in which the plurality of focus positions of the imaging unit, which are different from each other, and outer diameters of the cell are associated with each other, the table being generated in advance.

2. The image acquisition method according to claim 1, wherein
the acquisition of the image of the cell by the imaging unit is performed from above while the culture vessel is arranged in a horizontal plane, and
the focus position is at a position moved from a reference position upward in a direction perpendicular to the horizontal plane by a distance equal to a radius determined on a basis of the calculated outer diameter of the cell, the reference position being a lowest position of the recess.

3. The image acquisition method according to claim 2, wherein
the image of the cell is acquired by the imaging unit, the outer diameter of the cell is calculated on a basis of the image acquired by the imaging unit, the focus position of the imaging unit is determined on a basis of the calculation result of the outer diameter by referring to the table, and the image of the cell is acquired by the imaging unit at the determined focus position every arbitrary period.

4. The image acquisition method according to claim 2, wherein
the culture vessel further includes a plurality of focus adjustment marks arranged at positions outside the recess such that the plurality of focus adjustment marks are different in height from each other, the positions being higher than the lowest position of the recess and lower than a highest position of the recess, and
the focus position of the imaging unit is determined by using the focus adjustment mark and the image of the cell is acquired by the imaging unit at the determined focus position every arbitrary period after the determination of the focus position is performed by referring to the table.

5. The image acquisition method according to claim 4, wherein
the imaging unit is calibrated by using the focus adjustment mark of the culture vessel as a reference before the acquisition of the image of the cell, and
the determination of the focus position of the imaging unit is performed in view of the calibration result.

6. The image acquisition method according to claim 2, wherein
the culture vessel includes a plurality of recesses that individually contain a plurality of cells,
the acquisition of the image of the cell by the imaging unit is performed by collectively imaging the plurality of cells for each of the plurality of focus positions different from each other, the plurality of focus positions being included in the table,
one image for the outer diameter calculation is selected from the image result acquired for each of the plurality of focus positions different from each other, for each of the cells, and
the calculation of the outer diameter of the cell is performed based on the image selected for the outer diameter calculation.

7. An image acquisition method, comprising:
acquiring, by an imaging unit, an image of a cell in a culture vessel, the culture vessel including a recess containing the cell, and a plurality of focus adjustment marks arranged at positions outside the recess such that the plurality of focus adjustment marks are different in height from each other, the positions being higher than a lowest position of the recess and lower than a highest position of the recess;
calculating an outer diameter of the cell on a basis of the image acquired by the imaging unit;
selecting one focus adjustment mark from the plurality of focus adjustment marks on a basis of the calculation result of the outer diameter; and
acquiring, by the imaging unit, an image of the cell by using the focus adjustment mark as a focus position.

8. The image acquisition method according to claim 7, wherein
the outer diameter of the cell is calculated on a basis of the image obtained by the imaging unit, the one focus adjustment mark from the plurality of focus adjustment marks is determined on a basis of the calculation result of the outer diameter, and the focus adjustment mark is used as the focus position every arbitrary period.

9. The image acquisition method according to claim 8, wherein
the culture vessel includes a plurality of recesses that individually contain a plurality of cells,
the acquisition of the image of the cell by the imaging unit is performed by collectively imaging the plurality of cells for each of the focus adjustment marks,
one image for the outer diameter calculation is selected from the image result acquired for each of the focus adjustment marks, for each of the cells, and
the calculation of the outer diameter of the cell is performed based on the image selected for the outer diameter calculation.

10. An image acquisition apparatus, comprising:
an imaging unit that images a cell in a culture vessel including a recess containing the cell;
a calculation unit that calculates an outer diameter of the cell on a basis of the image acquired by the imaging unit; and
a determination unit that determines a focus position of the imaging unit on a basis of the calculation result of the outer diameter by referring to a table in which the focus position of the imaging unit and the outer diameter of the cell are associated with each other, the table being generated in advance.

11. An image acquisition apparatus, comprising:
an imaging unit that images a cell in a culture vessel, the culture vessel including a recess containing the cell, and a plurality of focus adjustment marks arranged at positions outside the recess such that the plurality of focus adjustment marks are different in height from each other, the positions being higher than a lowest position of the recess and lower than a highest position of the recess;
a calculation unit that calculates an outer diameter of the cell on a basis of an image acquired by the imaging unit; and
a determination unit that determines one focus adjustment mark from the plurality of focus adjustment marks on a basis of the calculation result of the outer diameter.

12. The image acquisition apparatus according to claim 10, further comprising
a culture apparatus that contains the culture vessel.

13. A program that causes an information processing apparatus to function as:
an image acquisition unit that acquires an image of a cell in a culture vessel including a recess containing the cell, the image being taken by an imaging unit;
a calculation unit that calculates an outer diameter of the cell on a basis of the acquired image of the cell; and
a determination unit that determines a focus position of the imaging unit on a basis of the calculation result, wherein
the determination unit determines the focus position of the imaging unit on a basis of the calculation result of the outer diameter, which is obtained by the calculation unit, by referring a table in which focus positions of the imaging unit, which are different from each other, and outer diameters of the cell are associated with each other, the table being generated in advance.

14. A program that causes an information processing apparatus to function as:
an image acquisition unit that acquires an image of a cell in a culture vessel, the culture vessel including a recess containing the cell, and a plurality of focus adjustment marks arranged at positions outside the recess such that the plurality of focus adjustment marks are different in height from each other, the positions being higher than a lowest position of the recess and lower than a highest position of the recess, the image being taken by an imaging unit;
a calculation unit that calculates an outer diameter of the cell on a basis of the acquired image of the cell; and
a determination unit that determines a focus position of the imaging unit on a basis of the calculation result, wherein
the determination unit determines one focus adjustment mark from the plurality of focus adjustment marks on a basis of the calculation result of the outer diameter which is obtained by the calculation unit.

15. A culture vessel, comprising:
a recess group including a plurality of recesses that individually contain a plurality of cells; and
a plurality of focus adjustment marks arranged at positions outside the recess group such that the plurality of focus adjustment marks are different in height from each other, the positions being higher than a lowest position of the recess and lower than a highest position of the recess.
